(19) Europäisches Patentamt

European Patent Office

Office européen des brevets

(11) **EP 0 772 310 B1**

(12) **EUROPEAN PATENT SPECIFICATION**

(45) Date of publication and mention
of the grant of the patent:
**27.09.2006 Bulletin 2006/39**

(51) Int Cl.:
*H04H 1/00* (2006.01)      *H04B 7/15* (2006.01)
*H04B 7/155* (2006.01)     *H04L 27/26* (2006.01)
*H04L 25/02* (2006.01)

(21) Application number: **96307838.1**

(22) Date of filing: **30.10.1996**

(54) **OFDM active deflectors**

Funksender für Wiederübertragung von OFDM-Signalen

Ré-émetteur pour signaux OFDM

(84) Designated Contracting States:
**BE DE FR IT**

(30) Priority: **30.10.1995 GB 9522198**

(43) Date of publication of application:
**07.05.1997 Bulletin 1997/19**

(73) Proprietor: **BRITISH BROADCASTING
CORPORATION**
**London W1A 1AA (GB)**

(72) Inventors:
• **Stott, Jonathan Highton**
**Tadworth,**
**Surrey, KT20 6NP (GB)**

• **Wells, Nicholas Dominic**
**Tadworth,**
**Surrey, KT20 6NP (GB)**

(74) Representative: **Abnett, Richard Charles**
**REDDIE & GROSE**
**16 Theobalds Road**
**London WC1X 8PL (GB)**

(56) References cited:
**EP-A- 0 215 479**      **EP-A- 0 227 393**
**EP-A- 0 453 203**      **EP-A- 0 498 369**
**EP-A- 0 613 266**      **WO-A-94/09604**
**WO-A-97/16942**        **GB-A- 2 065 421**
**US-A- 4 701 935**      **US-A- 5 168 459**

**Description**

This invention relates to active deflectors for use with orthogonal frequency-division multiplex (OFDM) signals. OFDM is proposed for use in the so-called digital audio broadcasting (DAB) system, also known as digital sound broadcasting (DSB), and in digital television (digital TV).

The DAB system is intended to be a single-frequency network (SFN), in which all the transmitters operate on precisely the same frequency. There will be a need for relay stations to act as gap-fillers to boost local reception in difficult areas, and for this purpose a re-transmitter is required which will transmit on the same frequency as it receives. Such a re-transmitter may be termed a simultaneous coherent re-broadcast transceiver, but can be called an 'active deflector' for short.

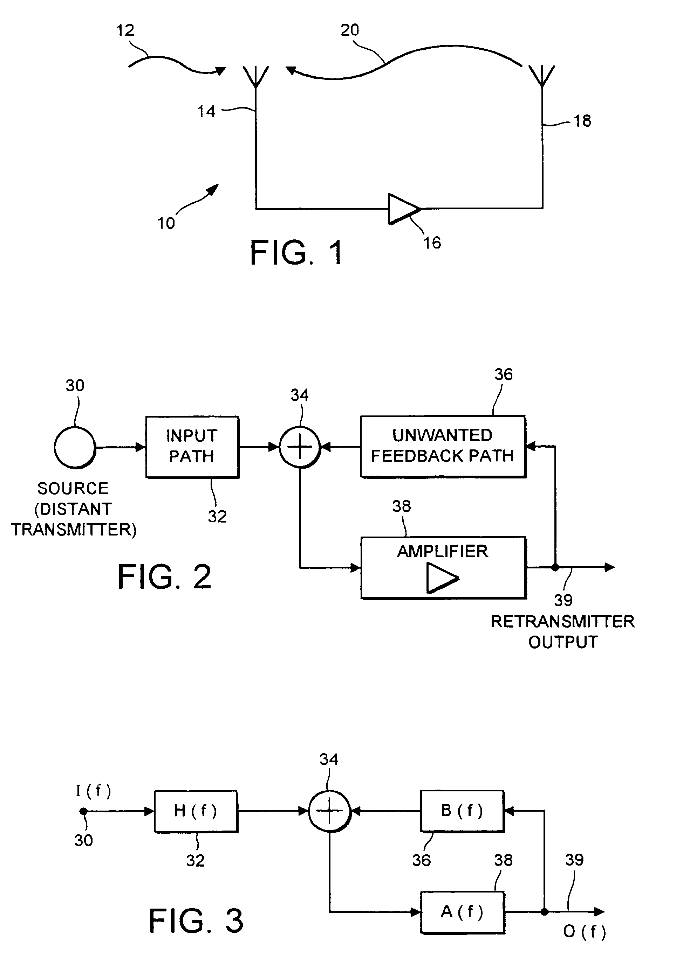

Since the active deflector is transmitting on the same frequency as it receives, there is a very considerable amount of feedback from the transmitting antenna to the adjacent receiving antenna. While OFDM is tolerant to a high degree of multipath distortion, this feedback would be likely to make the transceiver unstable and unusable. Such a re-transmitter is illustrated in greatly simplified outline in Figure 1. The re-transmitter 10 receives a broadcast RF signal 12 from a distant transmitter by way of a receiving antenna 14. The antenna output is amplified in an amplifier 16, and the amplified output is re-transmitted by way of a transmitting antenna 18. Some of the re-transmitted signal from the transmitting antenna 18 is picked up by the receiving antenna 14, either directly or after reflection from buildings, vehicles or trees etc. Such a feedback path is indicated by the reference 20.

It is possible to draw an equivalent circuit to this, as shown in Figure 2. In Figure 2 is seen a signal source 30, in this case the distant transmitter of Figure 1, and an input path 32 representing the signal path between the distant transmitter and the receiving antenna 14. At the receiving antenna the signal from the distant transmitter through input path 32 is combined in circuit 34 with the signal from the unwanted feedback path 36 which corresponds to the feedback path 20 of Figure 1. The combined signal from combiner 34 is applied to the amplifier 38 in Figure 2, corresponding to the amplifier 16 and transmitting antenna 18 in Figure 1. The output 39 of amplifier 38 both constitutes the desired output and provides the input to the feedback path 36.

While steps are taken, e.g. by using highly directional antennas, to reduce unwanted feedback, there is inevitably some unwanted feedback from the transmitting antenna back to the receiving antenna.

Figure 3 is a generalised diagram based on Figure 2, showing the transfer functions of the various parts of the system. It is assumed that the input signal 30 has spectrum I(f), the input path 32 has a frequency response H(f), the unwanted feedback path 36 has a response B(f), the amplifier 38 has a response A(f), and the output signal 39 has spectrum O(f). The resulting overall transfer function is:

$$\frac{O(f)}{I(f)} = \frac{A(f)\,H(f)}{1 - A(f)\,B(f)} \qquad\qquad (1)$$

As the complex-valued loop gain A(f)B(f) approaches (1 + j0), the system becomes unstable. If the loop contains a dominant delay which is significant compared with the reciprocal of the system bandwidth, then the frequency response contains regular ripples.

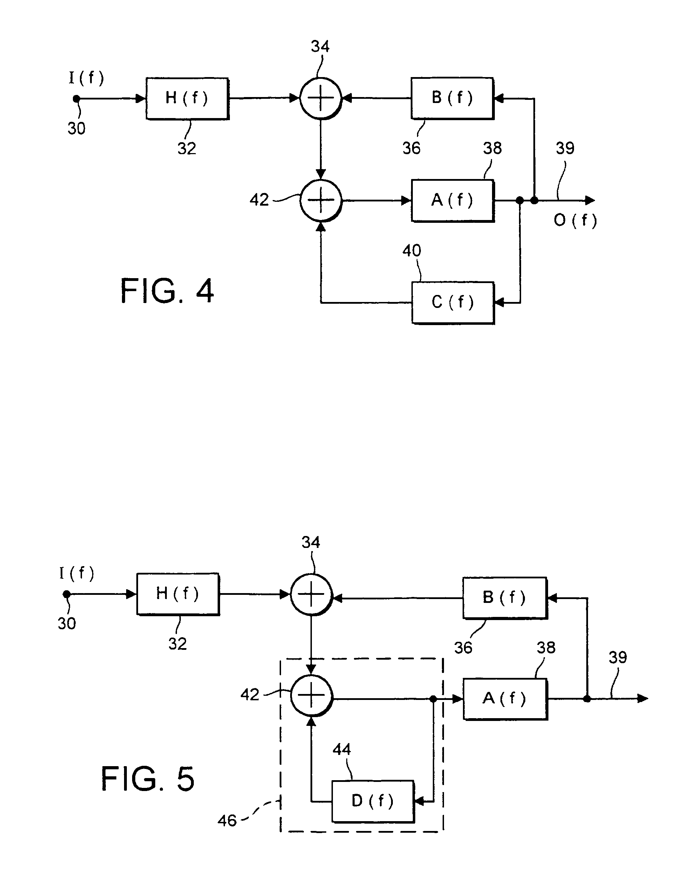

To remove the effect of this feedback it needs to be cancelled out. This can be done using either of the circuits of Figure 4 or Figure 5. In Figure 4, a compensating circuit 40 with transfer function C(f) has its input connected to the output of the amplifier 38. The output of the compensating circuit 40 is combined in a combining circuit 42 with the output of the existing combiner 34, and the output applied to the input of the amplifier 38. Such a circuit cancels out the unwanted feedback so long as C(f) = -B(f). This is known as neutralisation.

The overall transfer function now becomes:

$$\frac{O(f)}{I(f)} = \frac{A(f)\,H(f)}{1 - A(f)\,\{B(f) + C(f)\}} \qquad\qquad (2)$$

It has been proposed in relation to RF signals generally to use some simple technique so as to ensure that C(f) = -B(f) at some spot frequency which is most critical. Depending on the exact circuit used to ensure that the deliberate feedback has the right amplitude and phase this will give a more or less narrow-band solution.

Once feedback cancellation has been achieved, the final output is what would be expected, given that the signal has travelled the input path H(f):

$$\frac{O(f)}{I(f)} = A(f)\, H(f) \qquad\qquad (3)$$

However, the circuit of Figure 4 has certain disadvantages. For example, it might not be desired to tap off some of the amplifier output signal into the compensating path. Also, in the context of RF transmission, if the processing is done at an intermediate frequency or at baseband, the circuit of Figure 4 requires two down-converters. This is particularly disadvantageous if the processing in the compensating path is digital, since each down-converter must also then be accompanied by filtering and analogue-to-digital conversion.

The circuit of Figure 5 is therefore preferred. In this circuit the compensating path 44 with transfer function D (f) has its input coupled in parallel with the input of the amplifier 38, rather than being connected to its output. The compensating path 44 together with the combining circuit 42 now form a pre-corrector 46 for the amplifier 38.

The transfer response in this case is:

$$\frac{O(f)}{I(f)} = \frac{A(f)\, H(f)}{1 - D(f) - A(f)\, B(f)} \qquad\qquad (4)$$

To cancel the unwanted feedback D(f) is chosen so that D(f) = -A(f)B(f).

An example of a circuit of the type shown in Figure 5 is described in UK Patent Application GB-A-2 065 421. This describes a rebroadcast transceiver of unspecified application which compensates at baseband prior to amplification by a power amplifier. The circuit described in GB-A-2 065 421 is presented in Figure 6 of the present application. This figure is not as such in GB-A-2 065 421, but is based on its contents. The rebroadcast transceiver 300 is used to receive the off-air broadcast from source 330 through channel 332, combined at 334 with feedback from the transceiver output through path 336. The main amplifier 319 of the transceiver is preceded by a pre-corrector 346 which is fed by a signal on an antenna line 301 from combiner 334.

The pre-corrector comprises a series circuit containing a down-converter 304, a combining circuit 342, a low-pass filter 309, an amplifier 313, a delay 314, and an up-converter 311. A multiplicative mixer 324 is connected to receive and multiply together the input and the output of the delay 314. The output of the multiplicative mixer 324 is applied through a low-pass filter 326. A second multiplicative mixer 325 receives and multiplies together the output of the delay 314 and the output of the low-pass filter 326. The output of the second multiplicative mixer 325 is applied to the second input of the combining circuit 324 (actually represented by a simple junction in the patent specification).

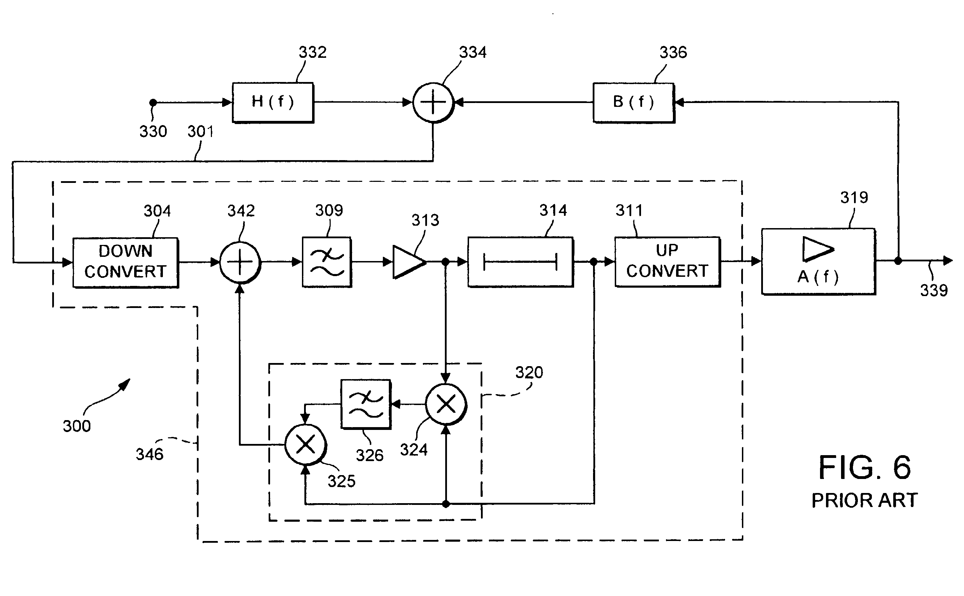

Because of the down-conversion operation, it is important to retain both phase and amplitude information in the signal. For this purpose the pre-corrector 346 operates with complex signals, but this complexity is not shown in Figure 6, for simplicity of explanation.

The circuits 324, 325 and 326 are together referred to as a "correlator" 320, the purpose of which is to compensate for feedback signals through path 336. The "correlator" 320 is stated to "correlate" unwanted frequencies sensed after filtering by the low-pass filter 309 with the unwanted frequencies present at the output of the down-converter 304 so as to effect cancellation. In fact, however, the "correlator" generates only a single output coefficient. The delay 314 is stated to be necessary in order to distinguish between the wanted signals and the feedback signal, so that the "correlator" operates only to cancel the unwanted signal. However, other known correlators may be used to produce a similar result.

This circuit can however only provide proper compensation at a single frequency, and thus is an extreme example of a narrow-band solution to the problem. It may be adequate for, e.g., military communications, but it cannot provide a solution which is acceptable for broadcast quality signals. A wide-band solution is therefore necessary.

European Patent Application EP-A-0 215 479 describes a single-frequency repeater in which the same data information is re-transmitted, but in which the signal waveform on which it is carried is quite different. United States Application US-A-4,701,935 describes a digital microwave radio repeater using the same carrier frequency which also has to demodulate and decode the transmission. This introduces significant processing delay. International Patent Application WO94/09604 describes a hearing aid with compensation for acoustic feedback provided by an electrical feedback signal which is passed through an adaptive filter controlled by coefficients from a correlator which compares a noise signal with the signal from the microphone combined with the electrical feedback signal. United States Patent 5,168,459 describes adaptive filters in FIR form where the filter coefficients are dynamically variable in response to characteristics of the filter output. The coefficients are updated by superimposing on the input signal a noise signal of known form, which is subsequently subtracted out again. European Patent Application 613,266 describes an OFDM receiver with compensation for differential delays. Distortion compensation is achieved by combining the signal with signals representative of adjacent carriers.

The present invention is defined in the independent claims below, to which reference should now be made. Advantageous features are set forth in the dependent claims.

A preferred OFDM active deflector embodying the invention is described in detail below which comprises an input antenna for receiving an OFDM input signal, an output antenna for transmitting an OFDM signal on the same frequency as the input signal, and an amplification path between the input and output antennas. The amplification path provides substantially linear processing and includes a delay. The deflector includes means responsive to the signal in the amplification path for producing a plurality of control coefficients, a transversal filter receiving the signal in the amplification path and controlled by the control coefficients to provide a modified signal, and a combiner for combining the modified signal with the signal in the amplification path so as to reduce the effect of the feedback. In this way, unwanted feedback from the output of the active deflector to the input is substantially eliminated. The compensation conveniently makes use of the inherent noise-like property of the OFDM signal, however a separate noise signal may be added if necessary. As will be seen from the description below, the OFDM signal is processed without demodulation and decoding, and, apart from the slight delay, without affecting the content of the OFDM signal in any way.

The invention will be described by way of example with reference to the accompanying drawings, in which:

Figure 1 is a diagrammatic view of an active deflector in which unwanted feedback can develop;
Figure 2 is an equivalent circuit diagram for the situation depicted in Figure 1;
Figure 3 is a generalised diagram based on Figure 2 showing the transfer functions of the various parts;
Figure 4 is a diagram similar to Figure 3 showing one way of providing compensation for the feedback;
Figure 5 is a diagram similar to Figure 3 showing another way of providing compensation for the feedback;
Figure 6 is a block diagram of a known re-broadcast transceiver;
Figure 7 is a block diagram of a first OFDM active deflector embodying the invention;
Figure 8 shows part of Figure 7 in more detail;
Figures 9 and 10 are successive re-arrangements of Figure 3 illustrating the theory of operation;
Figures 11 and 12 are successive re-arrangements of Figure 4 illustrating the theory of operation;
Figure 13 is a diagram illustrating a method of measurement of finite impulse response of a circuit with a feedback loop;
Figure 14 illustrates how the finite impulse response becomes an infinite impulse response as a result of the feedback;
Figure 15 is a block diagram of a second feedback reduction system embodying the invention, for use with RF (radio frequency) signals;
Figure 16 shows part of the system of Figure 15, similarly to Figure 8;
Figure 17 is a timing diagram illustrating the operation of the circuit of Figure 16; and
Figure 18 is a re-arrangement of Figure 4 illustrating the theory of operation of the second embodiment of Figure 15.

As discussed above, a narrow-band solution to the problem of unwanted feedback has been proposed. However, we have appreciated that in principle a wide-band result, suitable for OFDM signals, should be possible. The unwanted feedback is causal. In many cases it can be modelled to sufficient accuracy as a Finite Impulse Response (FIR) filter. It follows that what is needed for correction is the equal-and-opposite FIR, which is thus also causal and inherently stable. It is necessary to determine its response, and to adjust it if the unwanted feedback varies with time. This applies both to the circuit configuration of Figure 4, and to that of Figure 5. Provided that the amplifier has a finite impulse response, $D(f)$ is also FIR in form, though a little 'longer' than $C(f)$ of Figure 4.

The configuration of the compensating path 44 feeding round through the adder 42 has the effect of making the FIR response $D(f)$ in effect an Infinite Impulse Response (IIR) pre-corrector to the amplifier 38. This makes measurement difficult, but it is nevertheless possible, as described below.

### First Embodiment

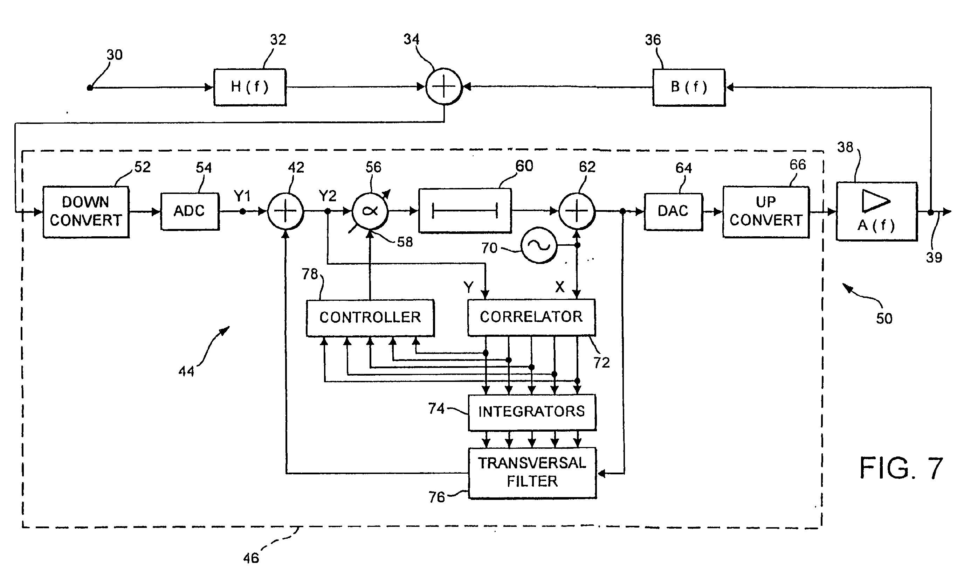

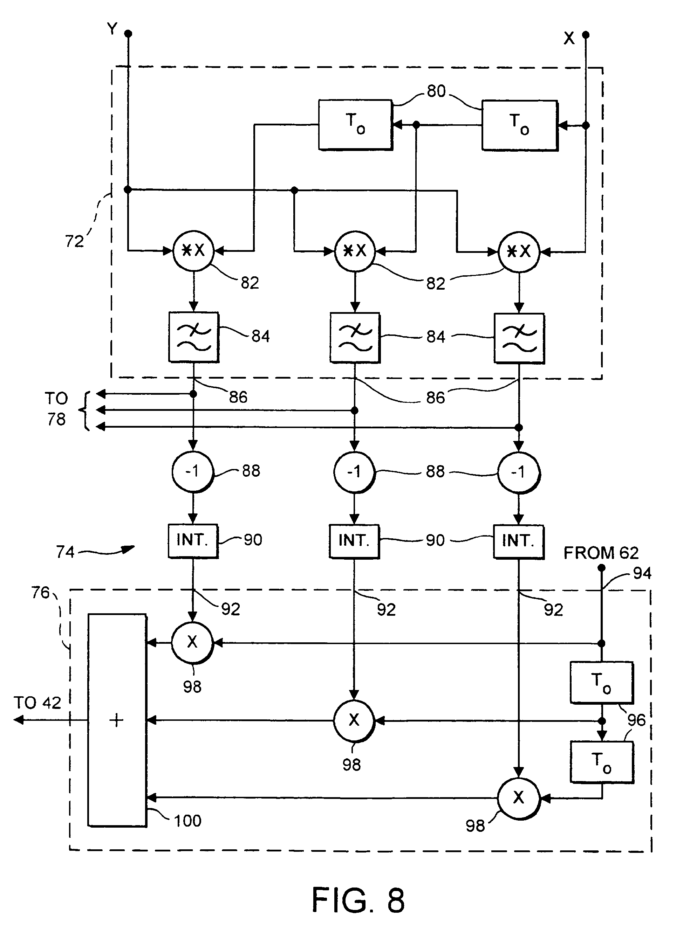

The construction of a first OFDM active deflector embodying the invention will be described with reference to Figures 7 and 8. The theory of operation of the circuit will then be explained subsequently.

The circuit of Figure 7 is of the type shown in Figure 5. Thus, a signal source 30 is coupled through an input path 32 and combined in a combiner 34 with unwanted feedback from a feedback path 36. The output of the combiner 34 is applied through a pre-corrector 46 to a main amplifier 38, the output 39 of which provides the desired output which also feeds the feedback path 36.

The system of Figure 7 is designed as an OFDM active deflector for use by a broadcasting authority as a relay station to boost local reception in difficult areas. It could also be designed for lower power output so as to be usable in a single building, such as a house, to allow reception in any room in the house without the need for a roof-mounted aerial with an outlet in every room.

The received signals are at RF frequency and are converted to baseband for the correction processing and converted back to RF afterwards. This means that the phase as well as the amplitude of the signals has to be maintained, leading to the processing of complex signals; that is signals which may be regarded as having real and imaginary parts. The in-phase and quadrature channels which are necessary are not shown in Figure 7, in order to keep the figure simple, but will be well understood by those skilled in the art.

The pre-corrector 46 of the feedback reduction circuit of Figure 7 receives broadcast signals at RF frequency, and a down-converter 52 first converts them to baseband. As just noted, in order that the RF signals can be correctly regenerated at the output of the pre-corrector, it is necessary for the amplitude and phase of the down-converted signals to be retained. This means that the down-converter 52 produces two output signals, namely a 0° or in-phase signal and a 90° or quadrature-phase signal. These complex signals are processed through two parallel channels, only one of which is shown.
The person skilled in the art will be familiar with the processing of complex signals in the form of real and imaginary parts, and so a more detailed description is not given here.

The down-converter 52 needs to be tuned to the RF signal being received. If the system is to be used to different RF channels, then the tuning will need to be changed (unless the system is sufficiently broad-band). When used in a low-power domestic transceiver configuration, the corrector can be arranged to be re-tuned by detecting the use of an infra-red remote-control handset of a broadcast receiver being supplied by the transceiver. Alternatively, the transceiver can be coupled to a control outlet on the receiver.

The amplification path comprising the circuit elements 52, 54, 42, 56, 60, 62, 64 and 66 contains only linear processing elements, and thus the path provides substantially linear processing on the signal passing through it.

The processing in the pre-corrector 46 is essentially done digitally, and so the output of the down-converter 52 is converted to digital form in an analogue-to-digital converter 54. The output of the analogue-to-digital converter is supplied to one input of the combiner 42, the output of which is applied to a series circuit comprising a variable-gain amplifier 56, the gain of which can be controlled in response to a control signal received at a control input 58 of the amplifier 56, a delay device 60, and an adder 62. The output of the adder 62 is converted back to analogue form by a digital-to-analogue converter 64, and is then converted back to RF frequencies by an up-converter 66.

The pre-corrector 46 further includes a noise signal generator 70. The output of the noise signal generator is applied to the adder 62 in the main signal path, and is also applied to an input X of a correlator 72. The correlator also receives at an input Y the output of the adder 42, that is to say the signal in the main signal path prior to delay in the delay 60 and amplification in the variable-gain amplifier 56. The correlator 72 provides a plurality of outputs representing the correlation coefficients between the signals at its X and Y inputs. These outputs are applied to an integrator block 74. The outputs of the integrator block are then applied to control a transversal filter 76, which receives its signal input from the output of the adder 62 in the main signal path and provides its output to the second input of the adder 42. The output of the transversal filter is designed to compensate for the unwanted feedback.

The output of the correlator 72 is also applied to a controller circuit 78, described below, which controls the gain of the variable-gain amplifier 56 through its control input 58.

The construction of the correlator 72, the integrator block 74, and the transversal filter 76 are shown in more detail in Figure 8. The correlator comprises a number of stages. For simplicity of explanation, only three stages are shown, but in practice a larger number of stages will be used. The number of stages depends upon (i) the tap spacing, which is determined by the normal requirements of the Nyquist sampling thereon and the bandwidth over which the compensation is to work, i.e. at least that of the signal, and (ii) the total lengths of the response to be compensated, i.e. the extent of the convolved impulse responses of feedback path 36 and amplifier 38. Thus while only three stages are shown, it should be borne in mind that typically there will be n stages.

To the input X of the correlator 72 are connected a series of (n - 1), in this case two, delays 80, each providing an incremental delay of duration To. The delay time $T_0$ is chosen according to the desired resolution of measurement of H(f) or rather its time-domain equivalent h(t). Conveniently $T_0$ may be the same as the period of the sampling rate used to generate the OFDM signal originally. The correlator 72 also includes n complex multipliers 82. Each multiplier 82 receives at one input a corresponding one of the X input and the (n - 1) delayed versions of the X input as supplied by the delays 80, and at the other input the signal at the Y input of the correlator 72. Finally the correlator includes n low-pass filters 84, which each receive the output of a corresponding one of the multipliers 82, and provide a corresponding output of the correlator 72. The n outputs 86 from the correlator 72 represent n correlation coefficients $\varphi_1, \varphi_2, \ldots \varphi_n$.

The n outputs 86 of the correlator 72 are applied to the controller 78 to control the gain of the variable-gain amplifier 56, in a manner which is described below.

The n outputs 86 of the correlator 72 are also applied through inverters 88, the purpose of which is described below, to respective integrator circuits 90 forming the integrator block 74. The integrator circuits provide an averaging function, and hold a value which is then used by the transversal filter 76. In practice, the integrators 90 and low-pass filters 84 may be combined.

The transversal filter 76 has control inputs 92 connected to the integrators 90, and a signal input 94 connected to the output of the adder 62 in the main signal path. The transversal filter 76 has n stages, corresponding to the n stages in the correlator 72, and in this simplistic example has only three stages. The signal at the input 94 is applied to the beginning of a series of (n - 1) incremental delays 96 each of length $T_0$, similar to the delays 80. A series of n multipliers 98 each have one input coupled to one of the input 94 and the (n - 1) delayed versions of it supplied by the delays 96, and the other input coupled to a respective one of the inputs 92. The outputs of the multipliers 98 are then all applied to an adder 100, the output of which constitutes the output of the transversal filter 76, and is applied to the second input of the adder 42 in Figure 7. The transversal filter 76 is thus seen to be of conventional design with a tapped delay line comprising delays 96, coefficient multipliers 98 receiving respective coefficients at inputs 92, and an adder 100 providing the output.

As noted above, the multipliers 82 are complex multipliers. What in fact is required, from a theoretical standpoint, is that when the multiplier multiplies its two inputs X and Y, one of them should in fact be the complex conjugate. That is to say the multiplier should form X*Y, where the asterisk indicates the complex conjugate. Two processes thus seem to be necessary to produce X*Y, namely (i) form the complex conjugate X* from X, and (ii) perform the complex multiplication X*Y.

However it can be shown that simply changing the sign of certain terms calculated in a complex multiplication achieves the same result as if one of the inputs had first been conjugated, while requiring no additional hardware. That is:
If X = a + jb
and Y = c + jd
where a, b, c, and d are all real, and j is the square root of minus one, then the product:

$$XY = (a + jb)(c + jd) = (ac - bd) + j(ad + bc).$$

The corresponding product, in which the complex conjugate of X is taken, is however:

$$X^*Y = (a - jb)(c + jd) = (ac + bd) + j(ad - bc),$$

that is, the same as XY but with the signs of two terms both changed. To form either XY or X*Y directly from complex inputs X and Y thus requires the same number of operations. These are four real multiplications, one addition and one subtraction.

In Figure 8 the asterisk (*) by one of the inputs of the multipliers 82 denotes an input which is, in effect, conjugated before the complex multiplication process, while requiring no more complexity than a normal complex multiplier. In principle, XY* could be used instead of X*Y.

**Theory of Operation**

The circuit of Figure 7 is based on the configuration of Figure 5, which is the preferred configuration, but the principles on which it operates are also applicable to the Figure 4 arrangement. The following description of the theoretical basis for the operation of the circuit will thus cover both the Figure 4 and Figure 5 systems, and will commence with Figure 4.

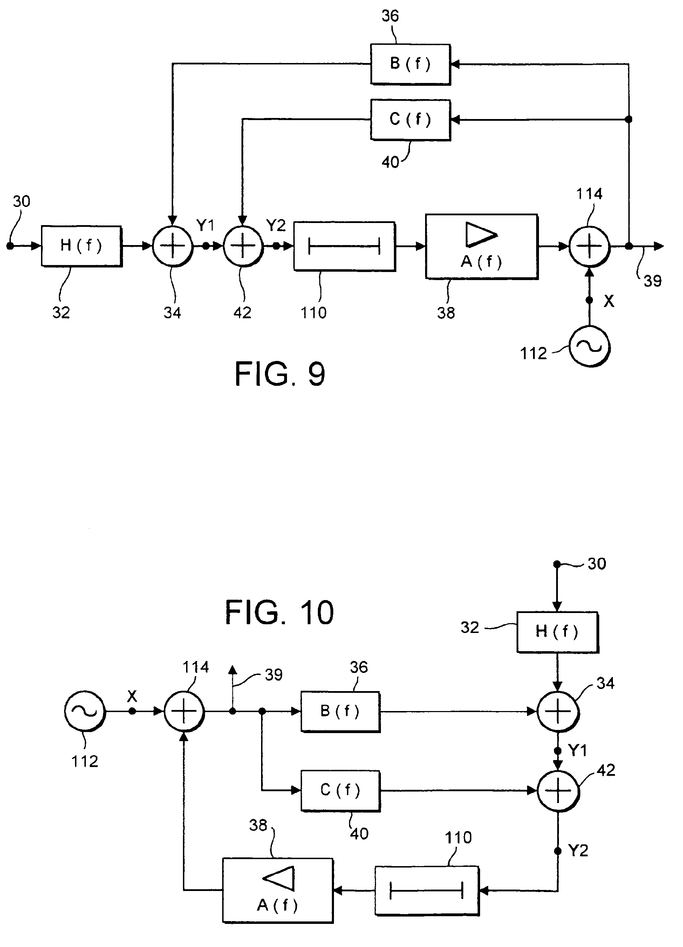

It will be recalled that Figure 4 shows the equivalent circuit diagram for a system with feedback, in which a compensating path is added in parallel with the feedback path and is arranged to cancel out the feedback. The Figure 4 circuit can be arranged into the form shown in Figure 9, with certain elements added. In Figure 9, a delay 110 is added in series with the amplifier 38, and a noise source 112 is provided. An adder 114 adds the outputs of the noise source 112 and the amplifier 38, and provides the output 39 of the circuit.

The circuit of Figure 9 can then be re-arranged into the form shown in Figure 10, this again being equivalent to Figure 4 but with the same added components. (The similarity with Figure 4 is however most easily seen by considering Figure 9 first.) Since it is a simple circuit re-arrangement, it need not be considered in detail. Briefly, however, it is seen that the noise signal from source 112 is injected by adder 114 into the feedback path 36 and compensating path 40, the outputs of which are combined with each other and with the signal from the input path 32, and recirculated through the delay 110 and amplifier 38, to the adder 114.

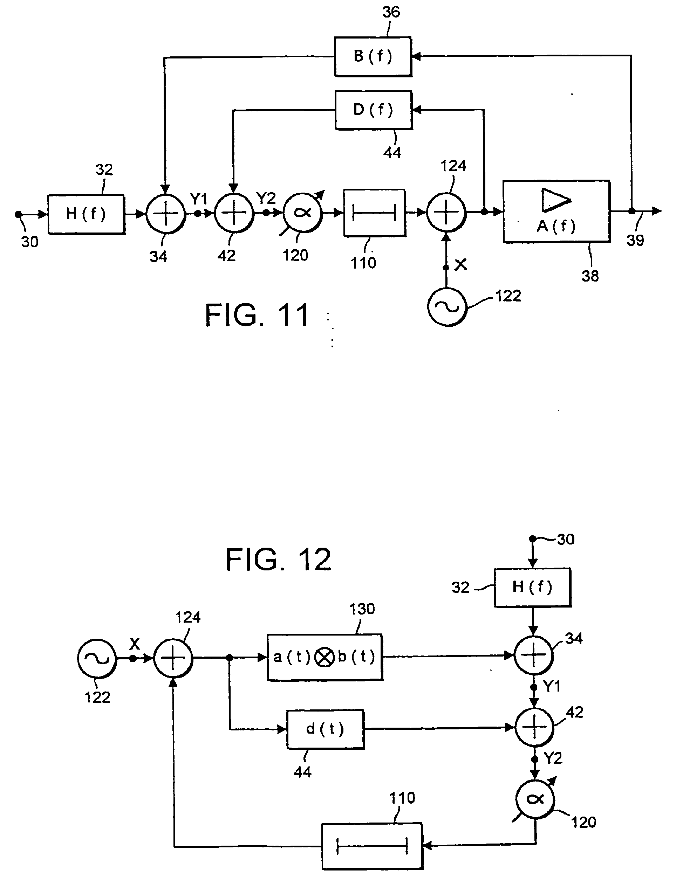

Similarly, the circuit of Figure 5 can be rearranged into the form shown in Figure 11. In this instance the compensating path 44 is taken before the amplifier 38, and the additional components comprise the delay 110, as with Figure 9, and also a variable-gain circuit 120 in series with the delay, a noise source 122, and an adder 124 adding the outputs of the noise source 122 and the delay 110 and providing an output to the amplifier 38 and to the compensating path 44. An advantage of the Figure 5 arrangement over Figure 4 is that the noise is injected at the input of the amplifier and not at the output, avoiding the need for such a high power noise source.

The circuit of Figure 11 can now be rearranged into the form shown in Figure 12. The noise signal from source 122 is injected by adder 124 into the composite path 130, which comprises the amplifier 38 and feedback 36, but which may be considered as one composite path as far as the noise is concerned, and also the compensating path 44. The outputs of these two paths are combined with each other and with the signal from the input path 32, and recirculated through the delay 110 to the adder 124. The signal output comes from within the composite path 130, but we are only interested in the noise component, and the main signal can be ignored, as seen below.

In order to cancel the unwanted feedback, it is desired, in relation to Figure 10, to make the compensating path equal and opposite to the unwanted feedback path. Thus using the terminology above, it is desired to make C(f) = -B (f). In relation to Figure 12, it is desired to make the compensating path equal to the combined effect of the amplifier and the unwanted feedback path. Thus it is desired to make D(f) = -A(f) B(f). If this is correctly achieved, the noise signal injected at adder 124 will be completely compensated, and the adder 42 will have zero noise contribution at its output.

The purpose of the feedback cancellation is to set C(f) or D(f) to the required function which is necessary to provide this cancellation. This can be achieved in either of two ways. The first way, which may be termed open-loop control, is to measure the distortion produced in the unwanted feedback path 36 in Figure 10 or the composite path 130 in Figure 12, and set the compensating path accordingly. To do this it is necessary to measure the transmission characteristic between the point X, namely the output of the noise source 112 or 122, and the point Y1, which includes the output of the feedback path 36 or the composite path 130. The point Y1 comes after addition with the output of the input path 32 in adder 34, because this is all that is accessible. However the input signal is irrelevant as discussed elsewhere in this specification, and can thus be ignored. The second way, which may be termed closed-loop control, is to measure the residual noise appearing at the output of adder 42, and then adjust or correct the compensating path in accordance with the amount of noise detected. Thus the error is directly determined. To do this it is necessary to measure the transmission characteristic between the same point X, on the one hand, and the point Y2, namely the output of the adder 116. Again, the signal from the input path is irrelevant.

The transmission characteristic which is required is the finite impulse response of the path 36 or 130, respectively. However, due to the recirculation loop through the delay 110, the response between point x and point Y1 or Y2 will not be a finite impulse response (FIR), but rather will be an infinite impulse response (IIR), which is more difficult to measure.

## Measurement of IIR

Our co-pending United Kingdom patent application No. 9522150.3 (GB-A-2,306,012) entitled "Method and apparatus for determining the response of a system containing a finite impulse response circuit coupled with a feedback loop" provides a method which can be used to measure the IIR of a circuit of the form of Figure 10 or Figure 12. This method involves determining the correlation between the signals at measuring points X and Y (whether Y1 or Y2). It will first be assumed that the input signal has zero correlation with the added noise source 112 or 122. If that is the case, the input signal and output signal can be ignored in Figures 10 and 12 (the output signal in Figure 12 has already been ignored in the above discussion).

In accordance with the aforementioned co-pending United Kingdom patent application No. 9522150.3, the response of a system containing a finite impulse response (FIR) circuit coupled with a feedback loop which introduces a loop delay $T_L$ can be determined. The method involves applying a test signal to the system, the test signal having an auto-correlation function which is the delta function, i.e., unity, meaning that the signal is uncorrelated with itself. This is the case with a true noise signal. In accordance with the method the input and output of the system under test are correlated. One of these is applied to delay means such as to produce a series of delayed signals, but with the total delay not exceeding the loop delay $T_L$. The other of the input and output of the system under test is multiplied with each of the delayed signals, and the resultants of the multiplication are smoothed to provide a degree of integration. The smoothed outputs will be representative of the correlation coefficients of the two inputs, and as shown in our aforementioned United Kingdom co-pending patent application, will represent the FIR of the FIR circuit.

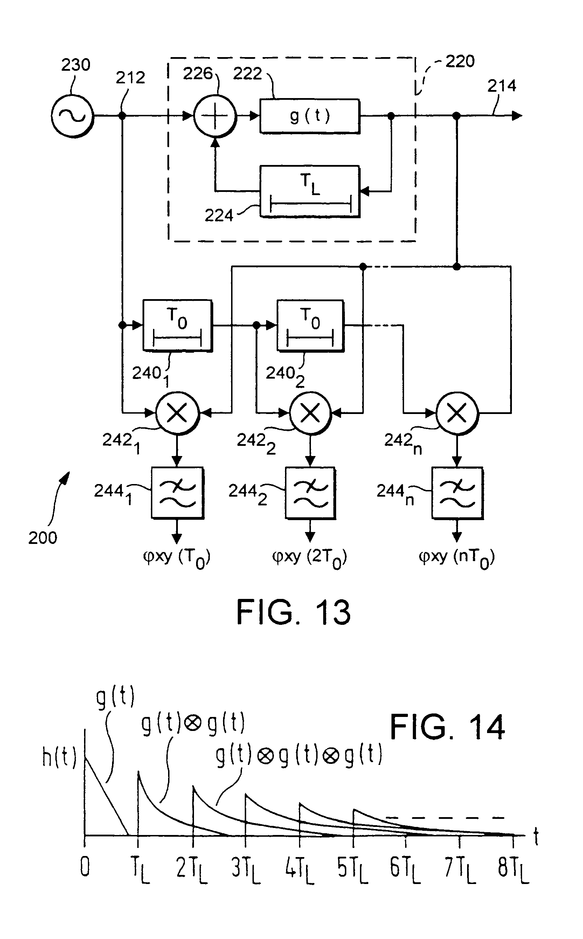

A practical example of such a measurement system 200 is shown in Figure 13, which is based on Figure 5 of our aforementioned patent application. The system is designed to determine the FIR of an FIR circuit 222 with which is associated a feedback loop having a delay 224 of delay time $T_L$. The delay output is combined in an adder 226 with an input signal 212 from a signal source 230. The aim is to determine the time-domain response g(t) of the circuit 222, when it is only possible to measure the response of the whole circuit 220. Measurement is thus made between the input 212 and the output 214 of the circuit block 220. A series of individual delays $240_1$, $240_2$ ... $240_{(n-1)}$ are provided connected in series. The input of the first delay is connected to the input line 212 and receives the output of the signal source 230. Associated with each delay there is a respective multiplier $242_1$, $242_2$ ... $242_n$. Multiplier $242_1$ receives the input of the first delay $240_1$ and multiplies this by the output signal on output line 214. The output of the multiplier $242_1$ is then applied to a low-pass filter $244_1$. The low-pass filter effects the averaging or integrating function. The output of the low-pass filter $244_1$ then constitutes the first coefficient of the correlation function $\varphi_{xy}$.

As shown, the signal at the input 212 of the system under test is applied to the delays 240, and the signal at the output 214 is applied directly to the other inputs of the multipliers 242. However it could possibly be the other way round, with the signal at the output 214 applied to the delays 240, and the signal at the input 212 applied directly to the other inputs of the multipliers 242.

The circuit 200 of Figure 13 correlates the signals at the input and the output of the circuit block 220, and produces a correlation function which comprises a series of n correlation coefficients. It is shown in our aforementioned co-pending application No. 9522150.3 that these correlation coefficients define the FIR of the circuit 222, provided that certain conditions are met. These are that the auto-correlation function of the signal from source 212 is a delta function, and that the total delay of the series of delays 240 is less than the delay in the feedback loop 224, i.e. $Nt_0 < T_L$. A degree of smoothing will also be desirable if not necessary.

The overall response of the circuit block 220 will not be of finite impulse response (FIR) form, but will clearly be of infinite impulse response (IIR) form. However, the present inventor has appreciated that it is made up of successive convolutions of g(t) with itself, so that the first part of the overall response of circuit block 220, over the period $0 < t < T_L$, will be identical to g(t). This assumes that g(t) is both causal and strictly limited in extent (time), such that g(t) = 0 for t < 0 and for $t \geq T_L$.

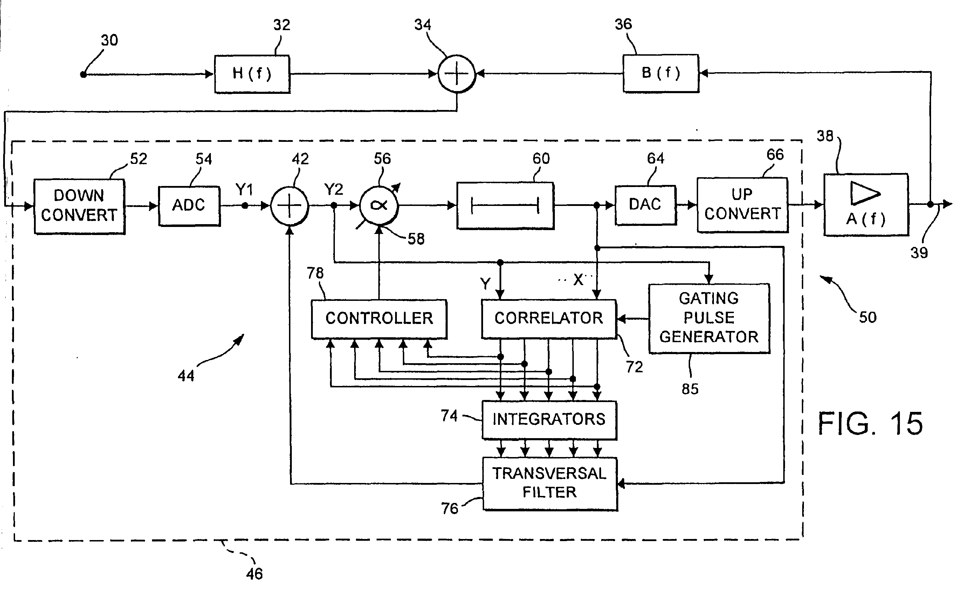

The manner in which the overall impulse response the is made up of the superposition of a series of 'echoes', that is to say successively more smeared-out versions of g(t), is shown in Figure 14. For the initial period 0 to $T_L$, there is nothing coming round the feedback loop, so the overall response is seen to be g(t). For the next period between $T_L$ and $2T_L$, the overall response is equal to $g(t) \otimes g(t)$. For the third period between $2T_L$ and $3T_L$, the overall response contains the component $g(t) \otimes g(t) \otimes g(t)$ as well. This continues for further time periods. However, it is also seen that, provided consideration is confined to the time period 0 to $T_L$, the form of g(t) can be determined simply from the overall response.

That is to say that with a system of the form shown in Figure 13, it is possible to measure all that is necessary in order to characterise it fully, by measuring its impulse response over a finite range, rather than for the infinite duration of its impulse response.

Figure 13 has shown the feedback path 224 as containing a simple delay. It can be shown that the principles apply equally well in the case where the feedback loop contains a delay in series with a circuit having some other response, for example having an impulse response r(t). All that is necessary is that the delay $T_L$ exceeds the finite duration of the convolution of g(t) and r(t).

Inspection of the circuits of Figures 10 and 12 will reveal that, so far as the noise signal is concerned, they are of the form of the circuit 220 in Figure 13. Thus the correlation method of our aforementioned application can be used to determine the response of the circuits in Figures 10 and 12 which correspond to circuit 222, notwithstanding that these circuits can not be isolated from the feedback loop. This is what is achieved by the correlator 72 in Figures 7 and 8. The correlator 72 measures the FIR of the circuits in Figures 10 and 12 as follows:

|  | Between X and Y1 | Between X and Y2 |
|---|---|---|
| Figure 10 | B(f) | B(f) + C(f) = E(f) |
| Figure 12 | A(f)B(f) | A(f)B(f) + D(f) = E(f) |

Figures 7 and 8 describe the preferred arrangement based on Figure 12 in which measurement is taken between X and Y2. Those skilled in the art will appreciate that all the possibilities just enumerated may however be used; the alternative point Y1 is marked on Figure 7.

Nevertheless a system in which the error is measured is preferred for the following reason. As noted in our aforementioned co-pending application, the response of the FIR circuit can be determined from the correlation function provided that the auto-correlation function of the test signal is a delta function. Nevertheless, the auto-correlation function will still introduce an unknown scaling factor. Where a noise-like signal is generated, as in Figure 7, this may not be too much of a problem, but it is a definite problem with the second embodiment described below.

Thus, if correlation is used to measure the unwanted feedback path in isolation, such as by using the measuring points X and Y1, the shape of the impulse response of the unwanted feedback path will be determined, but the exact amplitude will be unknown. It is therefore difficult to set the corrective feedback to be equal-and-opposite. On the other hand, if the error response is measured by using the measuring points X and Y2 so as to measure the net residual feedback after correction, then uncertainty as to its amplitude is less important. So long as the sense (sign) of the error is correctly determined, and if the shape is known, the appropriate correction can be applied.

Using this error type of measurement, what is measured is the error function, which in the time domain can be written:

$$e(t) = a(t) \otimes b(t) - d(t).$$

The aim is to make $e(t)$ as near as possible to zero. The operation proceeds in steps. The correction $d(t)$ is implemented and the error $e(t)$ is measured. This measurement is made in a sampled fashion with sampling frequency $f = 1/T_0$. The correction filter has n taps, and there are in fact n independent control loops, one for each tap. Each updates its tap weight by subtraction of an amount proportional to the corresponding element of the error measurement. For each of the n control loops, one can say:

$$d_{new} = d_{old} - \Delta$$

where $\Delta = \beta\gamma_n e$.

In this $\beta$ is the unknown scaling factor in the correlation measurement, and $\gamma_n$ is a factor introduced deliberately to control the performance of the control loop. The above relation will converge (assuming the feedback function stays constant) provided that $\beta\gamma_n < 1$. Thus if there is some idea of the value of $\beta$, then a sensible value of $\gamma_n$ can be chosen. For rapid convergence $\gamma_n$ should be as large as possible, and thus approach $1/\beta$.

The subtraction of the error element $\Delta$ shown in the above equation is illustrated in Figure 8 by the inclusion of the inverters 88. In practice the necessary inversion can be achieved at any of several points in the loop and will probably be the result of circuitry included in the loop for some other purpose.

Thus, in summary, Figure 13 shows that the circuit 220 can be measured in such a way as to determine the response of the circuit 222 having an associated feedback loop 224, notwithstanding that the circuit 222 cannot be isolated from the feedback loop for measurement purposes. Figures 10 and 12 show that the circuits of Figures 4 and 5 can be regarded as containing circuits of the form of the circuit 220. In the case of Figure 10, one can regard the feedback path 36 and the delay 110 as constituting the circuit 220 (open loop control), or one can regard the parallel combination of the feedback path 36 and the compensating path 40 with the delay 110 as constituting the circuit 220 (closed loop control). In the case of Figure 12, one can regard the composite path 130, which contains the feedback path 36, and the delay 110 as constituting the circuit 220 (closed loop control), or one can regard the parallel combination of the composite path 130 and the compensating path 44, with the delay 110, as constituting the circuit 220 (open loop control).

In Figure 7, the added delay 60 corresponds to the delay 110. Having measured the response of the circuit 36 of Figure 10 or the circuit 130 of Figure 12 by the method just described, the coefficients thus obtained are used to adjust the characteristic of the compensating path 40 in Figure 10 or the compensating path 44 in Figure 12. This is achieved by means of the transversal filter 76 in Figure 7 which provides the compensating path 44 of Figure 12.

Thus, by the addition of the delay 60 in the main signal path it becomes possible to measure the characteristic of the feedback path by a correlation method. The characteristic of the transversal filter 76, constituting the compensating path, can then be adjusted to cancel the effect of the feedback.

### Gain Adjustment

The purpose of the variable-gain amplifier 56 of Figure 7, and the manner of its adjustment, will now be described. The variable-gain amplifier 56 corresponds to the variable-gain amplifier 120 of Figures 11 and 12.

The variable-gain amplifier is desirable for two reasons:

  (i) to regulate the power output, and
  (ii) to maintain the stability of the deliberate feedback loop 44.

As regards this second point, the feedback correction can never be perfect, and it certainly will not be when the circuit is first switched on. This problem can be reduced by storing the parameters which are in effect at switch-off.

In an arrangement based on Figure 4, it is possible to adjust the gain within the main amplifier 38 without upsetting the balance between the unwanted feedback through path 36 and the deliberate correcting feedback through path 40. In other words, the adjustment of the gain of amplifier 38 does not interact with the measurement and feedback compensation operations.

This is not the case with an arrangement based on Figure 5, such as is shown in Figure 7. Here a balance is desired between the composite unwanted path A(f)B(f), and the added feedback D(f) which should equal -A(f)B(f). In this case the gain A(f) of amplifier 38 is part of what is being measured, and so it is preferred that it remains constant. For this reason a separate gain control in the form of variable-gain amplifier 56 is introduced in the main signal path so as to maintain the interdependence of measurement and feedback compensation.

The variable-gain amplifier 56 could be positioned elsewhere in the loop. Clearly it could follow the delay 60, rather than be before it, but it could also be located in other positions.

The basic setting of the gain $\alpha$ of the amplifier 56 can be chosen so as to give a value for $\alpha$ for the whole main signal path through the pre-corrector 46 as desired, in the manner discussed above.

One possible approach is to start with the value of $\alpha$ relatively small, that is with the gain low. Correlation measurements are then made, and they are used to reduce E(f) = A(f)B(f) + D(f). Then $\alpha$ can be increased and a new set of measurements made. This is repeated until the desired power output can be achieved without loss of stability.

The controller 78 provides this control. It monitors the outputs of the correlator 72. Precisely what it monitors and how it responds to it is not that important; it could simply form a weighted average of the magnitude of the correlation coefficients. It does not need to receive all the outputs of the correlator, but could operate with selected terms only.

Finally, the amplifier 56 can form part of an automatic gain control (AGC) system, tending to keep the signal within the range of the converters 54 and 64, and preventing any attempt to radiate more power than the amplifier 38 can produce. Perfect cancellation is never achievable, but the use of the amplifier 56 allows the cancellation to be made good enough.

## Second Embodiment

The construction of a second feedback reduction system embodying the invention will now be described with reference to Figures 15 to 17.

The circuit of Figure 15 is also of the type shown in Figure 5. Thus, a signal source 30 is coupled through an input path 32 and combined in a combiner 34 with unwanted feedback from a feedback path 36. The output of the combiner 34 is applied through a pre-corrector 46 to a main amplifier 38, the output 39 of which provides the desired output which also feeds the feedback path 36.

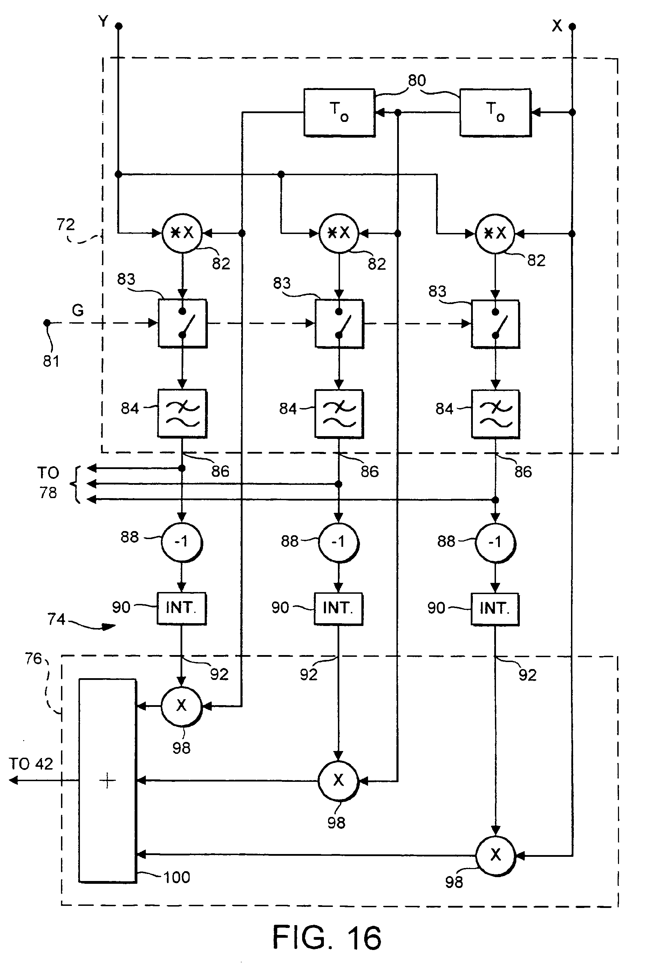

There are two main differences between the system of Figure 15 and that of the first embodiment of Figure 7. The first is that there is no added noise signal. Instead, the input OFDM signal is itself used as the test signal. This is discussed in more detail below. The second is that an improved OFDM correlator is used, as illustrated in Figure 16.

The pre-corrector 46 of the feedback reduction circuit of Figure 15 receives broadcast signals at RF frequency, and a down-converter 52 first converts them to baseband. As previously noted, in order that the RF signals can be correctly regenerated at the output of the pre-corrector, it is necessary for the amplitude and phase of the down-converted signals to be retained. This means that the down-converter 52 produces two output signals, namely a 0° or in-phase signal and a 90° or quadrature-phase signal. These complex signals are processed through two parallel channels, only one of which is shown. The person skilled in the art will be familiar with the processing of complex signals in the form of real and imaginary parts, and so a more detailed description is not given here.

The down-converter 52 needs to be tuned to the RF signal being received. If the system is to be used to different RF channels, then the tuning will need to be changed (unless the system is sufficiently broad-band). When used in a low-power domestic transceiver configuration, the corrector can be arranged to be re-tuned by detecting the use of an infra-red remote-control handset of a broadcast receive being supplied by the transceiver. Alternatively, the transceiver can be coupled to a control outlet on the receiver.

The processing in the pre-corrector 46 is essentially done digitally, and so the input to the pre-corrector 46 is converted to digital form in an analogue-to-digital converter 54. The output of the analogue-to-digital converter is supplied to one input of the combiner 42, the output of which is applied to a series circuit comprising a variable-gain amplifier 56, the gain of which can be controlled in response to a control signal received at a control input 58 of the amplifier 56, and a delay device 60. The output of the delay device 60 is converted back to analogue form by a digital-to-analogue converter 64, and is then converted back to RF frequencies by an up-converter 66.

The amplification path comprising the circuit elements 52, 54, 42, 56, 60, 64 and 66 contains only linear processing elements, and thus the path provides substantially linear processing on the signal passing through it.

There is no separate noise generator, and instead the output of the delay 60 is directly applied to an input X of a correlator 72. The correlator also receives at an input Y the output of the adder 42, that is to say the signal in the main signal path prior to delay in the delay 60 and amplification in the variable-gain amplifier 56. The correlator 72 provides a plurality of outputs representing the correlation coefficients between the signals at its X and Y inputs. These outputs are applied to an integrator block 74. The outputs of the integrator block are then applied to control a transversal filter 76, which receives its signal input in a manner described below from the main signal path and provides its output to the second input of the adder 42. The output of the transversal filter is designed to compensate for the unwanted feedback.

The output of the correlator 72 is also applied to a controller circuit 78, similarly to Figure 7, which controls the gain of the variable-gain amplifier 56 through its control input 58.

The construction of the correlator 72, the integrator block 74, and the transversal filter 76 can be as shown in Figure 8, subject to the requirement for processing of complex signals. However, some simplification can be achieved as is shown in Figure 16, which recognises that the signal input to the transversal filter 76 is now the same as the signal to input X of the correlator 72. Therefore only one series of delays $T_0$ is employed.

In Figure 16, the correlator again comprises a number of stages. For simplicity of explanation, only three stages are shown, but in practice a larger number of stages will be used. The number of stages depends upon (i) the tap spacing, which is determined by the normal requirements of the Nyquist sampling thereon and the bandwidth over which the compensation is to work, i.e. at least that of the signal, and (ii) the total lengths of the response to be compensated, i.e. the extent of the convolved impulse responses of feedback path 36 and amplifier 38. Thus while only three stages are shown, it should be borne in mind that typically there will be n stages.

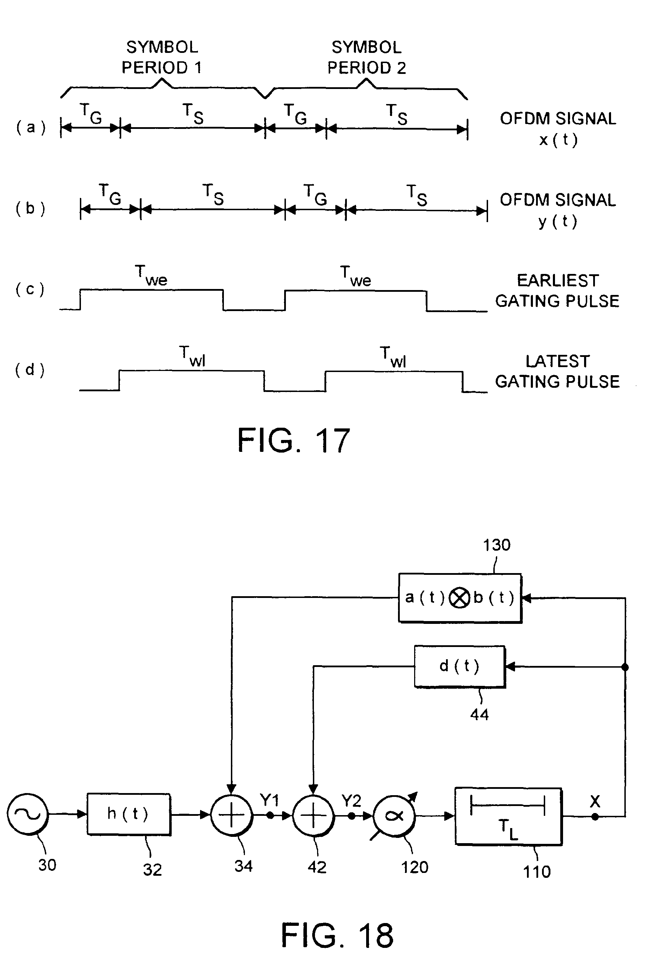

To the input X of the correlator 72 are connected a series of (n - 1), in this case two, delays 80, each providing an incremental delay of duration $T_0$. The delay time $T_0$ is chosen according to the desired resolution of measurement of H(f) or rather its time-domain equivalent h(t). Conveniently $T_0$ may be the same as the period of the sampling rate used to generate the OFDM signal originally. The correlator 72 also includes n multipliers 82. The multipliers 82 are again complex multipliers and are therefore designated with an asterisk in Figure 16. Each multiplier receives at one input a corresponding one of the X input and the (n - 1) delayed versions of the X input as supplied by the delays 80, and at the other input the signal at the Y input of the correlator 72. The output of each of the complex multipliers 82 is applied through a respective one of a series of gating circuits 83. The gating circuit are controlled by pulses received at an input 81. The timing of the gating pulses is important and is illustrated in Figure 17, discussed below. Finally the correlator includes n low-pass filters 84, which each receive the output of a corresponding one of the gating circuits 82, and provide a corresponding output of the correlator 72. The n outputs 86 from the correlator 72 represent n correlation coefficients $\varphi_1, \varphi_2, ... \varphi_n$.

The n outputs 86 of the correlator 72 are applied to the controller 78 to control the gain of the variable-gain amplifier 56, in a manner similar to that described above in relation to Figure 7.

The n outputs 86 of the correlator 72 are also applied through the inverters 88 to respective integrator circuits 90 forming the integrator block 74. The integrator circuits provide an averaging function, and hold a value which is then used by the transversal filter 76.

The transversal filter 76 has control inputs 92 connected to the integrators 90. The transversal filter 76 has n stages, corresponding to the n stages in the correlator 72, and in this simplistic example has only three stages. A series of n multipliers 98 each have one input coupled to one of the input X and the (n - 1) delayed versions of it supplied by the delays 80, and the other input coupled to a respective one of the inputs 92. Thus the delays 80 form part of the transversal filter as well as the correlator. The outputs of the multipliers 98 are then all applied to an adder 100, the output of which constitutes the output of the transversal filter 76, and is applied to the second input of the adder 42 in Figure 15. The transversal filter 76 is thus seen to be of conventional design, with a tapped delay line comprising delays 80, coefficient multipliers 98 receiving respective coefficients at inputs 92, and an adder 100 providing the output; notwithstanding that the delays 80 are used in common with the correlator 72.

## Theory of the second embodiment

The OFDM input signal may itself be sufficiently noise-like to fulfil the requirement of having an auto-correlation function that is substantially equal to the delta function. The correlation measurement can then be achieved without the need to add an extra test signal.

Figure 8 shows how the circuit of Figure 5 can be re-arranged with the addition of the variable-gain-circuit 120 and loop delay 110, in similar manner to Figures 11 and 12, but without the addition of the noise source. It is seen that a circuit of the form of the circuit 220 of Figure 13 still results. One can regard the composite path 130 and the delay 110 as constituting the circuit 220 (open loop control), or one can regard the parallel combination of the composite path 130 and the compensating path 44, with the delay 110, as constituting the circuit 220 (closed loop control).

In Figure 15, the added delay 60 corresponds to the delay 110. Having measured the response of the circuit 130 of Figure 8 by the above method, the coefficients thus obtained are used to adjust the characteristic of the compensating path 44. This is achieved by means of the transversal filter 76 in Figure 15 which provides the compensating path 44 of Figure 8.

In this instance the X input to the correlator 72 is not, of course, the output of the noise source 70 as in Figure 7, but is the output of the delay 60. The Y input is taken from Y1 or Y2 depending on whether open-loop or closed-loop control is used; Figure 15 shows closed-loop control, which is preferred.

## Operation of improved OFDM correlator

OFDM signals use a very large number of carriers and the data is split over the carriers such that the data rate on any given carrier is relatively low. That is to say the data period or active symbol period is longer than any interference delay that is likely to be encountered.

In an OFDM signal, the total symbol period is defined as the active symbol period plus a guard interval. The active symbol period is the reciprocal of the carrier spacing. When the guard interval is added to the data period of an OFDM signal, it allows the receiver to cope with a transmission path having delayed components, of delay up to the length of the guard interval. It has the desirable property of turning the convolution of the signal with the transmission path in effect into a circular one, equivalent to direct multiplication of corresponding discrete Fourier transform (DFT) frequency-domain coefficients. This makes equalisation in the receiver possible by simple direct division of the relevant frequency-domain coefficients.

Provided that essentially random data is conveyed by an OFDM signal, and each carrier is transmitted at the same power level, then the spectrum of the OFDM signal is almost rectangular, that is essentially flat within the occupied band and falling away at the edges. Because of this flatness it may be supposed that the OFDM signal is itself a useful test signal with which to make in-service measurements of the frequency or impulse responses of a system or channel through which it passes, e.g. by the correlation technique just described.

However, a side-effect of adding the guard interval is to make the spectrum less flat. In particular, the spectrum contains regular ripples which are distinguishable when viewing the spectrum in fine detail, although it still appears flat when the occupied band is viewed as a whole. This will affect the accuracy of measurements made (e.g. using conventional correlation techniques) under the assumption that the spectrum is flat.

Our second co-pending United Kingdom application No. 9522149.5 (GB-A-2,306,084) and European Application (EP-A-0 772 331) claiming priority therefrom entitled "Correlation of OFDM Signal" describes a method of correlating OFDM signals which overcomes these problems. Furthermore, in:at least some cases it offers the advantage of reducing the time needed for the correlation, particularly the time needed for integration.

Reference should be made to our said second co-pending application for a detailed description of the theory behind the improved OFDM correlation method. In brief, a modified correlation is performed in which the integration/averaging only takes place in a gated fashion, including only carefully-timed periods, of length $T_s$, aligned with the OFDM symbols. The result yields the impulse response h(t) of the system, just as if a continuous averaging had been used with some other x(t) having a genuinely flat spectrum.

Referring again to Figure 16, as noted above, the output of each of the complex multipliers 82 is applied through a respective one of gating circuits 83 to a corresponding respective one of a series of low-pass filters 84. The gating circuits 83 are closed (conductive) for the required period $T_s$. The gating circuits are controlled by pulses $T_w$ defining a gating window which are applied to the input 81. The timing of the pulses $T_w$ is illustrated in Figure 17. The gating pulses are generated by a gating pulse generator 85, shown in Figure 15, which receives the output of the adder 42. An output (not shown) of the gating pulse generator can also be applied to the controller 78 to synchronise changes in the gain of the variable-gain amplifier 56.

Figure 17 shows at (a) and (b) the OFDM input signals to the correlator 72 which may be termed x(t) and y(t), for two symbol periods of the OFDM signal. Each symbol period comprises an active symbol period or data period, $T_s$ and a guard interval $T_g$. In fact, the expression "guard interval" is something of a misnomer; the guard interval is in fact occupied by an extension of the signal during the active symbol period. The guard interval is not a null period. All this is well-known to those skilled in the art of OFDM signals.

The guard interval in an OFDM signal is chosen to be greater than the maximum expected delay in the signal, and the guard interval occupies the minor part of the total symbol period. Thus, as shown in Figure 17, the signal y(t) will in general be displaced relative to the signal x(t) by an amount less than the guard interval $T_g$. The active symbol period is the reciprocal of the carrier spacing. In fact y(t) will consist of many superposed versions of x(t), but it is sufficient to consider just the most-delayed version for the present. Equally, x(t) can include some delayed components too, and what is shown is the earliest version.

The gating pulse $T_w$ has length $T_s$, and must be timed so as to coincide with the same symbol period in both signals x(t) and y(t). Thus, the earliest at which it can start is the commencement of the symbol period of the later of the two signals. This is shown as the pulse $T_{we}$ at (c) in Figure 17. The latest at which the gating pulse can end is the end of the symbol period of the earlier of the two signals. This is shown as the pulse $T_{wl}$ at (d) in Figure 17. In either event the pulse length is $T_s$.

Thus the timing of the gating pulse may be as for $T_{we}$ or as for $T_{wl}$, or may be anywhere in between. The circuitry necessary to produce such a pulse will be within the capability of those skilled in the art, and will be similar to the circuitry required for providing timing and synchronising pulses in an OFDM broadcast receiver.

As is seen, the gating is synchronised with the OFDM symbol period. The 'null' symbol often included in the frame structure of an OFDM signal provides a coarse source of synchronisation which may be adequate for this purpose.

Alternatively, a more complex system as used in a standard OFDM receiver design could be employed.

The gating pulse generator 85 which controls the timing of the gating pulses derives its input from before the variable-gain amplifier 56, so that it can operate satisfactorily whatever the gain $\alpha$, and takes the delay time $T_L$ of the delay 60 into account so that the gating pulses are correctly timed with respect to the input X of the correlator 72. The output to the controller, if present, comprises a flag signal which indicates that synchronisation to the OFDM signal has been achieved. If it has not, this would suggest that the gain should be kept low.

For example, where the OFDM frame format contains a null symbol, and this is used as part of the synchronisation process, then if the null symbol can not be found by the gating pulse generator 85, then various things may e happening. The active deflector may be oscillating, in the which case the gain $\alpha$ of the variable-gain amplifier should be reduced abruptly until adequate compensation for the unwanted feedback is achieved. Or there may be no OFDM signal being received, in which case the gain $\alpha$ should likewise be abruptly reduced to avoid causing interference. If the null symbol can be found but is a 'dip' rather than a null, then the incoming signal may be suffering interference. It might then be better to lower the gain and effectively switch the active deflector off rather than make matters worse by re-transmitting the interference. In all these cases the necessary control of the variable-gain amplifier is achieved by the flag signal from the gating pulse generator 85 to the controller 78. The controller maintains the stability of the loop and the accuracy of its measurements by appropriately adjusting the gain $\alpha$ of the variable-gain amplifier 56, using the flag signal and the outputs of the correlator 72 on its inputs. The correlator provides a measure of the current error.

OFDM signals are complex, consisting typically of many hundreds of closely-spaced carriers, with the active data period arbitrarily extended on each carrier by the addition of a guard interval. Seemingly, the correlation of such signals, a complex mathematical operation, would be difficult to execute and would require sophisticated processing circuitry. As seen from the foregoing, however, by using the gating method described, correlation can be effected in an extremely simple manner using surprisingly straightforward circuit elements. Not only do the expected errors due to the presence of the guard interval not arise, but in addition the system has the further advantage that the correlation operation can be completed very quickly. For further discussion of this aspect, reference should again be made to our second aforementioned co-pending United Kingdom application No. 9522149.5.

Again, as in the first embodiment it is seen in the second embodiment that by the addition of the delay 60 in the main signal path it becomes possible to measure the characteristic of the feedback path by a correlation method. The characteristic of the transversal filter 76, constituting the compensating path, can then be adjusted to cancel the effect of the feedback.

Using the wanted signal as the test signal itself gives improved signal-to-noise ratio of both the measurement, and the resulting output signal, as no noise has to be added. There is also the instrumental advantage of not needing an extra circuit in the form of the noise generator.

## Gain adjustment in the Second Embodiment

The signal X(f) appearing at point X can be seen from Figure 18 to be:

$$X(f) = \{ I(f) H(f) + [A(f) B(f) + D(f)] X(f) \} \alpha e^{-j\omega T}$$

$$\quad \ldots \quad (5)$$

This can be re-arranged to give:

$$X(f) = \frac{\{ I(f) H(f) \} \alpha e^{-j\omega T}}{[1 - \alpha e^{-j\omega T} \{ A(f) B(f) + D(f) \}]} \quad (6)$$

In order for the auto-correlation function of the signal to be as close as possible to a delta function, X(f) should be as flat as possible across the frequency spectrum. However, X(f) will not be flat if any of the following are not flat:

(i) the original wanted-signal spectrum I(f);
(ii) the input path H(f); or
(iii) the denominator of expression (6).

The last of these, (iii), represents the extent to which the spectrum is shaped by the loop in the system. Its influence can be minimised both by keeping the gain $\alpha$ small, and by improving the balance between the unwanted and compensating feedback so that A(f)B(f) + D(f) tends to zero.

The best method of operation is thus to follow an iterative procedure as follows. Initially the value of $\alpha$ is set small, that is the gain is very low. Correlation measurements are then made and an initial set of correlation coefficients are obtained. The compensating path is adjusted to bring D(f) closer to -A(f)B(f), i.e. A(f)B(f) + D(f) will be reduced. Then $\alpha$ is increased, and the measurement step repeated. This will further improve the compensation, and thus $\alpha$ can be increased again.

These steps are repeated, until the desired power output can be achieved without loss of stability. Provided that the initial measurements yield close enough results, the process will converge to the correct setting.

### Reduction of the added delay

As is seen from the foregoing, insertion of a delay $T_L$ within the loop permits the unambiguous measurement of either the unwanted feedback itself or the error caused by the unwanted feedback when combined with the wanted signal. However, the same delay $T_L$ is introduced into the passage of the wanted signal. This has disadvantages for OFDM deflectors because the delay through the active deflector could possible upset receivers which receive its output together with a direct signal, and because it raises questions as to whether the guard interval of the OFDM signal will be long enough for the gated-correlation method of Figure 16 to work with sufficient accuracy.

The delay 60 is under the system designer's control, and will normally be chosen to exceed the maximum delay caused in the feedback path 36. We have appreciated that, where closed-loop control is used in the correlation measurement, the delay period can be adaptively reduced.

Referring back to Figure 14, it will be recalled that this illustrates the overall infinite impulse of a system comprising an FIR with characteristic g(t), together with an added recirculating delay $T_L$ which is longer than the extent of g(t). Such a system is represented by the circuit block 220. The overall response of the circuit block 220 starts with a distinct version of g(t), followed by a series of overlapping and decaying echoes, as described above.

If $T_L$ is shortened so that the extent of g(t) is greater than $T_L$, then the first part of the loop's response between O and $T_L$ no longer represents a complete, distinct picture of g(t). The last part of g(t) will merge with the first part of the first echo between $T_L$ and $2T_L$. Nevertheless, the first part of g(t), up to time $T_L$, remains distinct and measurable.

If this situation pertains with one of the above-described embodiments, such as in Figure 7 or Figure 15, where closed-loop control is used, the taps in the transversal filter 76 which cover the time up to $T_L$ will still converge correctly to the required correction. Their error measurements are never polluted by the echoes. This assumes that the unwanted feedback path is unchanging (or, in practice, changes relatively slowly). The taps in the transversal filter 76 which cover the time period beyond $T_L$ will be polluted by the echoes as this first phase of the operation takes place.

However, once the taps of the transversal filter covering the time period O to $T_L$ have converged, then the error e(t) over the period $0 \leq t \leq T_L$ will be zero. This means that the first part, of length $T_L$, of the first 'echo' will also be zero. Thus the measurements of the error e(t) for the period $T_L \leq t \leq 2T_L$ are also now distinct, so that the corresponding taps of the corrector can converge. This process can continue indefinitely in a 'wave of correction', sweeping outwards from the origin, for a corrector of any arbitrary length exceeding $T_L$.

It may be preferred not to try to correct the outer terms until the inner terms of the transversal filter have settled down. That is, the later corrector taps can be held at zero, as their error measurements are known to be polluted during the initial correction phase, until the coefficients for the period O to $T_L$ have been determined.

Thus $T_L$ can be chosen to be shorter than the maximum delay introduced in the feedback path and the system will still function. In principle, the delay could be reduced down to a single sampling period, in which case the coefficients will be determined one by one.

The main disadvantages is that the process takes longer to converge. Roughly speaking one can say that if the control loops are set so they each take $T_C$ to converge, then for a system where the extent of g(t) does not exceed the delay $T_L$, the loops can all settle independently in parallel and overall system convergence takes $T_C$. If the extent of g(t) does exceed the delay $T_L$, and is say $KT_L$, then convergence will take roughly $kT_C$, as the loops converge in a combined sequential/parallel fashion, $T_L$'s worth at a time. While in principle the delay $T_L$ could be reduced to a single sample delay, in this case convergence would be strictly sequential, each tap having to wait for all the previous ones to settle first. Furthermore, there could be difficulty if, as is inevitable in practice, the auto-correlation function $\varphi_{xx}(\tau)$ of the 'test signal' departs from a pure delta function.

This is the case whether the test signal is an added noise signal or the wanted signal itself. On the other hand, a simpler correlator could be employed which only evaluated the cross-correlation for a single point at a time, rather than evaluating it for all points in parallel, as in Figures 8 and 16.

Another problem is that the ability of such a system to cope with varying unwanted feedback paths is limited. Each time one of the 'early' taps was disturbed, many or even most of the subsequent taps are disturbed too. So, the use of a delay $T_L$ which is shorter than appears to be necessary is best suited to situations where little (or at least very slow) variation in the unwanted feedback is to be expected. The more nearly the delay $T_L$ approaches the extent of d (t), the quicker the convergence and the better the ability of the system to cope with changes in the unwanted feedback.

There may be advantages in choosing different values to $T_C$ for the control loops of the various taps, setting it to be shorter for the early ones, and longer for the later ones. Furthermore, initial lock (on switch-on or RF-channel change) might be speeded up by starting from the last-used correction, stored for the purpose.

It has been assumed that $T_L$ is chosen to be a fixed value. It may be possible to provide an adaptive arrangement in which $T_L$ starts at a large value, giving quick convergence but introducing maximum delay in the signal path, and is then successively reduced.

**Implementation**

The circuits illustrated in Figures 7, 8 and 15, 16 have been described in terms of a hardware embodiment, with discrete circuits. It will be appreciated that the circuitry may however be implemented in part or wholly in software. In this case the figures should be regarded as equivalent to flow charts.

The most difficult part of the above procedure is at switch-on. It is possible to overcome this problem by designing the system so that it is switchable between two states, in the first of which there is an added noise generator as in Figure 7, and in the second of which the wanted signal is used as the test signal, as in Figure 15. Initially measurements are made with added noise using the Figure 7 configuration and the gain of the variable-gain amplifier is set to zero. Setting $\alpha$ to zero ensures that the system cannot oscillate at switch-on, and the correction can be trimmed to balance out the unwanted feedback. Once this is achieved the noise generator can be turned off or disconnected and the system re-configured as in Figure 15. Now the wanted signal is used for measurements and the value of $\alpha$ slowly increased. As the loop now starts off in an in-balance condition, any errors should be small, so that the spectrum of the measurement signal should be sufficiently flat. This will ensure that the above iterative process converges on the correct setting as $\alpha$ is increased.

The foregoing discussion has assumed the use of complex arithmetic. The complex values used can in principle be derived as I and Q components in an analogue fashion. For example, in a digital television application each of the I and Q signals may be sampled at a rate of, say, 9 MHz, giving two data streams of 9 Msample/s (Mega-samples per second). Alternatively, the signal may be sampled once at twice this rate, e.g. 18 MHz. This can be done at a very low intermediate frequency (IF). Two streams of 9 M/sample/s, corresponding to the real and imaginary parts of the complex baseband representation, are then derived from them using interpolation. It is possible that the correlation method using complex correlation as illustrated in Figure 16 could be performed using the single sample stream of 18 Msample/s and ordinary real (not complex) arithmetic.

It has been assumed in the foregoing that an RF OFDM active deflector will only operate over a certain bandwidth, and signals within that bandwidth will, in conventional manner, be shifted down to an intermediate frequency (IF) and probably thence to a complex baseband equivalent for processing. There may be circumstances where it is desired to install an active deflector which can receive more than one channel but which should not require changing over manually to the different channels. Such a situation could arise in a domestic relay station, intended to amplify the received OFDM signals for reception within a single building, for example. If more than one RF channel is used, the listener or viewer may wish to tune his receiver, possibly a portable receiver, to any one of them. Indeed, there may be more than one receiver in the building, tuned to different programmes in different RF channels and all expecting support from the same active deflector.

With this problem in mind, the active deflector could be 'frequency-agile' and change RF channels when the user's receiver does, This can be achieved by detecting the use of the IR (infra-red) remote-control; handset of the receiver. Alternatively, the active deflector can be linked to an outlet or bus on the receiver, and receive an instruction by that route. This will however not serve multiple receivers in the same building.

Finally, it should be noted that the circuit shown are somewhat schematic. In practice extra delay elements will be inserted, in accordance with the normal practice of synchronous circuit design, without disturbing the relative delays of the signals. The added delay might at first appear to increase the delay through the processing, but it is possible to re-distribute the way in which the delay $T_L$ is inserted so as to compensate.

**Alternatives to the described correlation method.**

The foregoing description has illustrated the use of correlation to generate a series of coefficients to control the transversal filter 76. However other methods of generating such a series of coefficients may be possible, and two examples will now briefly be discussed.

# EP 0 772 310 B1

## 1. Use of Pilot Information

OFDM signals as proposed often include pilot information within the signal structure. This corresponds to the many carriers being modulated with defined constellation values at certain points in the OFDM frame. This is to be done with DAB and possibly also with the video of digital terrestrial television. The receiver compares the demodulated values with those known to have been transmitted and thereby deduces the channel response from source to the receiver. With DAB, which uses DQPSK (differential quadrature phase-shift keying), this pilot information is inserted once per frame. With digital terrestrial television, where higher-order modulation such as 16- or 64-QAM (quadrature amplitude modulation) may be used, the pilot information is used for equalisation before demodulation, which is coherent demodulation. In this case pilot information is inserted in various forms throughout the frame.

These pilot signals could also be measured in an active deflector, using a part of the normal proposed receiver circuitry. The full synchronisation procedure would need to be invoked. That is, it would be necessary to acquire the following: coarse timing, e.g. from the null symbol; coarse and fine frequency lock; fine timing; and, possibly, sampling-frequency lock.

Measurements of the pilot signals at suitable points in the active deflector could be used instead of the correlator 72 to do the same job. The complex frequency response (the total effective frequency response from the OFDM modulator to the point of measurement) is measured for each carrier at both the points to which the correlator is connected in the illustrated examples, e.g. points X and Y1 or Y2. The two sets of results are then divided carrier by carrier to produce samples of the measured frequency response ($G_k = Y_k/X_k$). If these are then transformed to the time domain using the discrete Fourier transform (DFT), the impulse response g(t) of the system between the measuring points is obtained. This approach exploits the provision of the delay 60 of delay time $T_L$ inserted in the loop to expose the internal FIR in an analogous way as with the correlation technique.

The values $X_k$ obtained at the monitoring point X can also give an indication of the quality of the signal finally obtained after cancellation was well balanced, and thus can be used for quality assurance. This can be done whether the active deflector used correlation or transformation of pilot-tone results. It might be possible to extend this method to deal with echoes on the incoming signal.

## 2. LMS method

The LMS (least mean square) method is well-known and is described for example in the textbook 'Adaptive Signal Processing' by Widrow, B. and Stearns, S.D., 1985, Prentice-Hall. The LMS method is a way of assessing the correlation of sets of values. Thus the LMS method could be used to optimise the setting of the filter taps, forming a set of variables, in order to optimise a desired criterion of system performance. Possibly the LMS algorithm could be used in conjunction with measurements made using pilot tone information include within the OFDM structure, as described above. These pilot signals could be measured in the active deflector at the output or input of the main amplifier 38, so as to form a measure of the 'badness' of the loop frequency response. This measure could then be used to drive the LMS algorithm.

A suitable measure of such 'badness' might be the RMS (root mean square) difference from unity of the frequency response from source to the measurement point. When the 'badness' is reduced to zero, the unwanted feedback has been correctly cancelled. This method may also be able to deal with echoes on the incoming signal.

Another possibility applies with correlation of the error signal, i.e. closed loop control, especially when the added delay has a delay time $T_L$ which is insufficient to permit unambiguous measurements. It is desired to drive the error signal to zero, so some single function of the measurements of the error-signal cross-correlation is formed, for example the power. That is used to drive the LMS algorithm to control the taps of the correcting transversal filter. This may be expected to converge more slowly than the explicit calculation of the filter-tap correction using variable gain as described above, though perhaps faster than might be achieved when employing the method using reduction of the delay time.

It will be appreciated that many modifications and variations can be made to the systems described within the scope of the appended claims.

## Claims

1. An orthogonal frequency-division, OFDM, active deflector, comprising;
   an input antenna (14) for receiving an OFDM input signal;
   an output antenna (18) for transmitting an OFDM signal on the same frequency as the input signal;
   an amplification path (52,54,42,56,60,64,66,38) between the input and output antennas, the amplification path providing substantially linear processing including a delay (60);
   means (72) responsive to the signal in the amplification path for producing a plurality of control coefficients;

a transversal filter (76) receiving the signal in the amplification path and controlled by the control coefficients to provide a modified signal; and

a combiner (42) for combining the modified signal with the signal in the amplification path in the sense as to reduce the effect of the feedback.

2. An OFDM active deflector according to claim 1, in which the means for producing a plurality of control coefficients comprises means (70,62) for introducing into the amplification path a noise signal having an auto-correlation function which is substantially a delta function, and a correlator (72) for correlating the signal before the delay with the noise signal to produce a plurality of correlation coefficients.

3. An OFDM active deflector according to claim 2, including means which after an initial period changes the correlation step so that correlation is between the signal before being delayed in the delay with the signal after being delayed in the delay.

4. An OFDM active deflector according to claim 1, in which the means for producing a plurality of control coefficients comprises means (52,54) for passing through the amplification path a signal having an auto-correlation function which is substantially a delta function, and a correlator (72) for correlating the said signal before being delayed in the delay with the signal after being delayed in the delay to produce a plurality of correlation coefficients.

5. An OFDM active deflector according to claim 4, in which the correlator and the transversal filter make use of a common delay chain.

6. An OFDM active deflector according to any of claims 2 to 5, in which the correlator comprises means for applying one of the signals to be correlated to delay means such as to produce a series of delayed signals, means for multiplying the other of the signals to be correlated with each of the said one of signals and the delayed signals, and means for smoothing the signals resulting from the multiplication to provide a degree of integration thereof.

7. An OFDM active deflector according to any of claims 2 to 6, including means for combining the modified signal with the signal in the amplification path before the delay.

8. An OFDM active deflector according to any of claims 2 to 7, including means for integrating the coefficients before application thereof to control the transversal filter.

9. An OFDM active deflector according to any of claims 2 to 8, in which the amplification path includes a variable-gain amplifier.

10. An OFDM active deflector according to claim 9, in which the gain of the variable-gain amplifier is varied in dependence upon the correlation coefficients.

11. An OFDM active deflector according to claim 9 or 10, in which the gain of the variable-gain amplifier is initially at a relatively low value and is increased as the feedback is reduced by operation of the method.

12. An OFDM active deflector according to claim 9, 10 or 11, in which the variable-gain amplifier forms part of an automatic gain control system.

13. An OFDM active deflector according to any of claims 2 to 12, in which the correlator includes means for multiplying one of the signals being correlated by a plurality of incrementally-delayed versions of the other, and means for selecting and accumulating the resultants of the multiplication for a time duration substantially equal in length to that of the data period of the OFDM signals, to produce a plurality of correlation coefficients.

14. An OFDM active deflector according to claim 13, in which the multiplication is a complex multiplication.

15. An OFDM active deflector according to claim 13, further comprising integrating means coupled to the output of the selecting and accumulating means for integrating the output thereof.

16. An OFDM active deflector according to claim 15, in which the integrating means comprises a low-pass filter.

17. An OFDM active deflector according to any preceding claim, in which at switch-off the coefficients are stored, and on subsequent switch-on the stored coefficients are used as initial values.

18. An OFDM active deflector according to any preceding claim, in which the delay is a variable delay, and including means for reducing the delay from an initial value as the feedback is reduced.

19. An OFDM active deflector according to any preceding claim, in which the amplification path operates with signals in complex form.

20. An OFDM active deflector according to any preceding claim, in which the active deflector is used in conjunction with at least one broadcast receiver, and the tuning of the active deflector is controlled in response to a remote control device which operates the broadcast receiver.

21. An OFDM active deflector according to claim 1, in which the means for producing a plurality of control coefficients comprises measurement means which operates in accordance with the LMS algorithm.

22. An OFDM active deflector according to claim 21, including means responsive to pilot signals in the input signal to drive the LMS algorithm.

23. An OFDM active deflector according to claim 1, in which the means for producing a plurality of control coefficients comprises measurement means responsive to pilot signals in the input signal.

24. An OFDM active deflector according to any preceding claim, including means responsive to pilot signals in the input signal to check the effectiveness of the feedback reduction.

25. A method of re-transmitting a broadcast signal on the same frequency as it is received, comprising the steps of:

    receiving an orthogonal frequency-division multiplex, OFDM, input signal;
    substantially linearly processing the input OFDM signal including introducing a delay (60);
    generating in response to the signal being processed a plurality of control coefficients;
    applying the signal being processed to a transversal filter controlled by the control coefficients to provide a modified signal;
    combining the modified signal with the processed signal in the amplification path in the sense to reduce the effect of the feedback; and
    transmitting the modified signal as an OFDM signal on the same frequency as the input signal.

**Patentansprüche**

1. Aktiver OFDM-(Orthogonal Frequency Division Multiplex)-Deflektor, der Folgendes umfasst:

    eine Eingangsantenne (14) zum Empfangen eines OFDM-Eingangssignals;
    eine Ausgangsantenne (18) zum Senden eines OFDM-Signals auf derselben Frequenz wie das Eingangssignal;
    einen Verstärkungspfad (52, 54, 42, 56, 60, 64, 66, 38) zwischen der Ein- und der Ausgangsantenne, wobei der Verstärkungspfad im Wesentlichen lineare Verarbeitung einschließlich eines Verzögerungsglieds (60) bietet;
    ein Mittel (72), das auf das Signal im Verstärkungspfad anspricht, um eine Mehrzahl von Steuerkoeffizienten zu erzeugen;
    einen Transversalfilter (76), der das Signal im Verstärkungspfad empfängt und durch die Steuerkoeffizienten gesteuert wird, um ein modifiziertes Signal zu erzeugen; und
    ein Kombinationsglied (42) zum Kombinieren des modifizierten Signals mit dem Signal im Verstärkungspfad in dem Sinne, dass der Feedback-Effekt reduziert wird.

2. Aktiver OFDM-Deflektor nach Anspruch 1, in dem das Mittel zum Erzeugen einer Mehrzahl von Steuerkoeffizienten Mittel (70, 62) zum Einführen eines Rauschsignals in den Verstärkungspfad mit einer Autokorrelationsfunktion, die im Wesentlichen eine Delta-Funktion ist, und einen Korrelator (72) zum Korrelieren des Signals vor der Verzögerung mit dem Rauschsignal umfasst, um eine Mehrzahl von Korrelationskoeffizienten zu erzeugen.

3. Aktiver OFDM-Deflektor nach Anspruch 2 mit einem Mittel, das nach einer Anfangsperiode den Korrelationsschritt ändert, so dass eine Korrelation zwischen dem Signal vor der Verzögerung im Verzögerungsglied mit dem Signal nach der Verzögerung im Verzögerungsglied erfolgt.

4. Aktiver OFDM-Deflektor nach Anspruch 1, in dem das Mittel zum Erzeugen einer Mehrzahl von Steuerkoeffizienten Mittel (52, 54), um ein Signal mit einer Autokorrelationsfunktion, die im Wesentlichen eine Delta-Funktion ist, durch den Verstärkungspfad zu leiten und einen Korrelator (72) zum Korrelieren des genannten Signals vor der Verzögerung im Verzögerungsglied mit dem Signal nach der Verzögerung in dem Verzögerungsglied umfasst, um eine Mehrzahl von Korrelationskoeffizienten zu erzeugen.

5. Aktiver OFDM-Deflektor nach Anspruch 4, in dem der Korrelator und der Transversalfilter eine gemeinsame Verzögerungskette nutzen.

6. Aktiver OFDM-Deflektor nach einem der Ansprüche 2 bis 5, in dem der Korrelator Folgendes umfasst: Mittel zum Anlegen eines der zu korrelierenden Signale an Verzögerungsmittel, um eine Reihe von verzögerten Signalen zu erzeugen, Mittel zum Multiplizieren des anderen der zu korrelierenden Signale mit dem genannten einen der Signale und mit den verzögerten Signalen, und Mittel zum Glätten der Signale, die von der Multiplikation resultieren, um einen Grad an Integration davon bereitzustellen.

7. Aktiver OFDM-Deflektor nach einem der Ansprüche 2 bis 6 mit Mitteln zum Kombinieren des modifizierten Signals mit dem Signal in dem Verstärkungspfad vor der Verzögerung.

8. Aktiver OFDM-Deflektor nach einem der Ansprüche 2 bis 7 mit Mitteln zum Integrieren der Koeffizienten vor deren Applikation zum Steuern des Transversalfilters.

9. Aktiver OFDM-Deflektor nach einem der Ansprüche 2 bis 8, in dem der Verstärkungspfad einen Regelverstärker beinhaltet.

10. Aktiver OFDM-Deflektor nach Anspruch 9, in dem der Verstärkungsfaktor des Regelverstärkers in Abhängigkeit von den Korrelationskoeffizienten variiert wird.

11. Aktiver OFDM-Deflektor nach Anspruch 9 oder 10, in dem der Verstärkungsfaktor des Regelverstärkers zunächst auf einem relativ niedrigen Wert ist und zunimmt, während das Feedback mittels der Methode reduziert wird.

12. Aktiver OFDM-Deflektor nach Anspruch 9, 10 oder 11, in dem der Regelverstärker einen Teil eines automatischen Verstärkungsregelsystems bildet.

13. Aktiver OFDM-Deflektor nach einem der Ansprüche 2 bis 12, in dem der Korrelator Mittel zum Multiplizieren eines der korrelierten Signale mit einer Mehrzahl von inkremental verzögerten Versionen des anderen und Mittel zum Wählen und Akkumulieren der Resultanten der Multiplikation für eine Zeitdauer beinhaltet, deren Länge im Wesentlichen gleich dieser Datenperiode der OFDM-Signale ist, um eine Mehrzahl von Korrelationskoeffizienten zu erzeugen.

14. Aktiver OFDM-Deflektor nach Anspruch 13, in dem die Multiplikation eine komplexe Multiplikation ist.

15. Aktiver OFDM-Deflektor nach Anspruch 13, der ferner Integrationsmittel umfasst, die mit dem Ausgang des Auswahl- und Akkumulationsmittels zum Integrieren von dessen Ausgang gekoppelt ist.

16. Aktiver OFDM-Deflektor nach Anspruch 15, in dem das Integrationsmittel einen Tiefpassfilter umfasst.

17. Aktiver OFDM-Deflektor nach einem der vorherigen Ansprüche, in dem beim Abschalten die Koeffizienten gespeichert und beim Wiedereinschalten die gespeicherten Koeffizienten als Anfangswerte verwendet werden.

18. Aktiver OFDM-Deflektor nach einem der vorherigen Ansprüche, in dem die Verzögerung eine veränderliche Verzögerung ist und der Mittel zum Reduzieren der Verzögerung von einem Anfangswert mit abnehmendem Feedback beinhaltet.

19. Aktiver OFDM-Deflektor nach einem der vorherigen Ansprüche, in dem der Verstärkungspfad mit Signalen in komplexer Form arbeitet.

**20.** Aktiver OFDM-Deflektor nach einem der vorherigen Ansprüche, in dem der aktive Deflektor in Verbindung mit wenigstens einem Rundfunkempfänger verwendet wird und die Abstimmung des aktiven Deflektors als Reaktion auf ein Fernsteuergerät gesteuert wird, das den Rundfunkempfänger betreibt.

**21.** Aktiver OFDM-Deflektor nach Anspruch 1, in dem das Mittel zum Erzeugen einer Mehrzahl von Steuerkoeffizienten Messmittel umfasst, die gemäß dem LMS-Algorithmus arbeiten.

**22.** Aktiver OFDM-Deflektor nach Anspruch 21 mit Mitteln, die auf Pilotsignale im Eingangssignal zum Ansteuern des LMS-Algorithmus ansprechen.

**23.** Aktiver OFDM-Deflektor nach Anspruch 1, in dem das Mittel zum Erzeugen einer Mehrzahl von Steuerkoeffizienten Messmittel umfasst, die auf Pilotsignale im Eingangssignal ansprechen.

**24.** Aktiver OFDM-Deflektor nach einem der vorherigen Ansprüche mit Mitteln, die auf Pilotsignale im Eingangssignal zum Prüfen der Wirksamkeit der Feedback-Reduzierung ansprechen.

**25.** Verfahren zum Neusenden eines Rundfunksignals auf derselben Frequenz, auf der es empfangen wurde, das die folgenden Schritte umfasst:

> Empfangen eines OFDM-(Orthogonal Frequency Division Multiplex)-Eingangssignals;
> im Wesentlichen lineares Verarbeiten des OFDM-Eingangssignals einschließlich Einführen einer Verzögerung (60);
> Erzeugen einer Mehrzahl von Steuerkoeffizienten als Reaktion auf das verarbeitete Signal;
> Anlegen des verarbeiteten Signals an einen Transversalfilter, der von den Steuerkoeffizienten gesteuert wird, um ein modifiziertes Signal zu erzeugen;
> Kombinieren des modifizierten Signals mit dem verarbeiteten Signal im Verstärkungspfad in dem Sinne, dass der Effekt des Feedbacks reduziert wird; und
> Senden des modifizierten Signals als OFDM-Signal auf derselben Frequenz wie das Eingangssignal.

**Revendications**

**1.** Déflecteur actif, OFDM (Orthogonal Frequency Division Multiplex), à répartition en fréquence orthogonale, comprenant :

> une antenne d'entrée (14) pour recevoir un signal d'entrée OFDM ;
> une antenne de sortie (18) pour transmettre un signal OFDM sur la même fréquence que le signal d'entrée;
> un chemin d'amplification (52, 54, 42, 56, 60, 64, 66, 38) entre les antennes d'entrée et de sortie, le chemin d'amplification fournissant un traitement sensiblement linéaire y compris un retard (60) ;
> un moyen (72) répondant au signal dans le chemin d'amplification en produisant une pluralité de coefficients de commande ;
> un filtre transversal (76) recevant le signal dans le chemin d'amplification et commandé par les coefficients de commande afin de fournir un signal modifié ; et
> un combinateur (42) pour combiner le signal modifié avec le signal dans le chemin d'amplification de façon à réduire l'effet de la contre-réaction.

**2.** Déflecteur actif OFDM selon la revendication 1, dans lequel le moyen pour produire une pluralité de coefficients de commande comprend un moyen (70, 62) pour introduire dans le chemin d'amplification un signal de bruit ayant une fonction d'auto-corrélation qui est sensiblement une fonction delta, et un corrélateur (72) pour corréler le signal avant le retard avec le signal de bruit afin de produire une pluralité de coefficients de corrélation.

**3.** Déflecteur actif OFDM selon la revendication 2, comportant un moyen qui après une période initiale change le pas de corrélation de telle sorte que la corrélation se fasse entre le signal avant son retard dans le retard avec le signal après son retard dans le retard.

**4.** Déflecteur actif OFDM selon la revendication 1, dans lequel le moyen pour produire une pluralité de coefficients de commande comprend un moyen (52, 54) pour passer par le chemin d'amplification un signal ayant une fonction d'auto-corrélation qui est sensiblement une fonction delta, et un corrélateur (72) pour corréler ledit signal avant son retard avec le signal après son retard dans le retard afin de produire une pluralité de coefficients de corrélation.

5. Déflecteur actif OFDM selon la revendication 4, dans lequel le corrélateur et le filtre transversal utilisent une chaîne à retard commune.

6. Déflecteur actif OFDM selon l'une quelconque des revendications 2 à 5, dans lequel le corrélateur comprend un moyen pour appliquer l'un des signaux à corréler à un moyen de retard de façon à produire une série de signaux retardés, un moyen pour multiplier l'autre des signaux à corréler avec chacun desdits un des signaux et des signaux retardés, et un moyen pour lisser les signaux résultant de la multiplication afin de fournir un degré d'intégration de ceux-ci.

7. Déflecteur actif OFDM selon l'une quelconque des revendications 2 à 6, comportant un moyen pour combiner le signal modifié avec le signal dans le chemin d'amplification avant le retard.

8. Déflecteur actif OFDM selon l'une quelconque des revendications 2 à 7, comportant un moyen pour intégrer les coefficients avant leur application afin de commander le filtre transversal.

9. Déflecteur actif OFDM selon l'une quelconque des revendications 2 à 8, dans lequel le chemin d'amplification comporte un amplificateur à gain variable.

10. Déflecteur actif OFDM selon la revendication 9, dans lequel le gain de l'amplificateur à gain variable varie en fonction des coefficients de corrélation.

11. Déflecteur actif OFDM selon la revendication 9 ou 10, dans lequel le gain de l'amplificateur à gain variable est initialement à une valeur relativement basse et est augmenté lorsque la contre-réaction est réduite par le fonctionnement du procédé.

12. Déflecteur actif OFDM selon la revendication 9, 10 ou 11, dans lequel l'amplificateur à gain variable fait partie d'un système à commande automatique de gain.

13. Déflecteur actif OFDM selon l'une quelconque des revendications 2 à 12, dans lequel le corrélateur comporte un moyen pour multiplier l'un des signaux corrélés par une pluralité de versions incrémentiellement retardées de l'autre, et un moyen pour sélectionner et accumuler les résultats de la multiplication pendant une durée de temps sensiblement égale à celle de la période de données des signaux OFDM, afin de produire une pluralité de coefficients de corrélation.

14. Déflecteur actif OFDM selon la revendication 13, dans lequel la multiplication est une multiplication complexe.

15. Déflecteur actif OFDM selon la revendication 13, comprenant en outre un moyen d'intégration couplé à la sortie des moyens de sélection et d'accumulation pour intégrer leur sortie.

16. Déflecteur actif OFDM selon la revendication 15, dans lequel le moyen d'intégration comprend un filtre passe-bas.

17. Déflecteur actif OFDM selon l'une quelconque des revendications précédentes, dans lequel à la mise hors tension, les coefficients sont mémorisés, et à la mise sous tension suivante, les coefficients mémorisés sont utilisés comme valeurs initiales.

18. Déflecteur actif OFDM selon l'une quelconque des revendications précédentes, dans lequel le retard est un retard variable, et comportant un moyen pour réduire le retard par rapport à une valeur initiale lorsque la contre-réaction est réduite.

19. Déflecteur actif OFDM selon l'une quelconque des revendications précédentes, dans lequel le chemin d'amplification fonctionne avec des signaux de forme complexe.

20. Déflecteur actif OFDM selon l'une quelconque des revendications précédentes, dans lequel le déflecteur actif est utilisé conjointement avec au moins un récepteur de diffusion, et l'accord du réflecteur actif est commandé en réponse à un dispositif de télécommande qui actionne le récepteur de diffusion.

**21.** Déflecteur actif OFDM selon la revendication 1, dans lequel le moyen pour produire une pluralité de coefficients de commande comprend un moyen de mesure qui fonctionne conformément à l'algorithme des moindres carrés moyens (LMS).

**22.** Déflecteur actif OFDM selon la revendication 21, comportant un moyen répondant à des signaux pilotes dans le signal d'entrée en commandant l'algorithme LMS.

**23.** Déflecteur actif OFDM selon la revendication 1, dans lequel le moyen pour produire une pluralité de coefficients de commande comprend des moyens de mesure répondant à des signaux pilotes dans le signal d'entrée.

**24.** Déflecteur actif OFDM selon l'une quelconque des revendications précédentes, comportant un moyen répondant à des signaux pilotes dans le signal d'entrée en vérifiant l'efficacité de la réduction de la contre-réaction.

**25.** Procédé de retransmission d'un signal diffusé à la même fréquence que celle à laquelle il est reçu, comprenant les étapes de :

réception de signaux d'entrée multiplexés par répartition en fréquence orthogonaux, OFDM (Orthogonal Frequency Division Multiplex);

traitement sensiblement linéaire du signal OFDM d'entrée avec introduction d'un retard (60) ;

génération en réponse au signal traité d'une pluralité de coefficients de corrélation ;

application du signal traité à un filtre transversal commandé par les coefficients de commande afin de fournir un signal modifié ;

combinaison du signal modifié avec le signal traité dans le chemin d'amplification afin de réduire l'effet de la contre-réaction ; et

transmission du signal modifié comme signal OFDM à la même fréquence que celle du signal d'entrée.

FIG. 1

FIG. 2

FIG. 3

FIG. 4

FIG. 5

FIG. 6
PRIOR ART

FIG. 7

EP 0 772 310 B1

FIG. 8

FIG. 9

FIG. 10

FIG. 11

FIG. 12

FIG. 13

FIG. 14

FIG. 15

EP 0 772 310 B1

FIG. 16

SYMBOL
PERIOD 1

SYMBOL
PERIOD 2

(a) $T_G$ $T_S$ $T_G$ $T_S$ OFDM SIGNAL
$x(t)$

(b) $T_G$ $T_S$ $T_G$ $T_S$ OFDM SIGNAL
$y(t)$

(c) $T_{we}$ $T_{we}$ EARLIEST
GATING PULSE

(d) $T_{wl}$ $T_{wl}$ LATEST
GATING PULSE

## FIG. 17

130

$a(t) \otimes b(t)$

$d(t)$

44

30 32 34 Y1 42 Y2 120 110

$h(t)$ $\propto$ $T_L$ X

## FIG. 18